# EUROPÄISCHE PATENTANMELDUNG

(11) **EP 1 174 335 A2**
(43) Veröffentlichungstag der Anmeldung: **23.01.2002**
(21) Anmeldenummer: 01117527.0
(22) Anmeldetag: 20.07.2001
(51) Int. Cl.: B62K 3/00

(54) **Tretroller, ggf. zusammenklappbar, und Tragbandeinrichtung dafür**

(30) Priorität: 17.08.2000 DE 20014191 U; 21.07.2000 DE 20012700 U; 28.08.2000 DE 20014874 U; 08.12.2000 DE 20020857 U
(71) Anmelder: Ahlbäumer, Georg, Dr., 7500 St. Moritz (CH)
(72) Erfinder: Ahlbäumer, Georg, Dr. Klink Gut, 7500 St. Moritz (CH); Reichel, Ulrich, Dipl.-Ing., 69509 Mörlenbach (DE)
(74) Vertreter: Jordan, Volker, Dr.

(57) **Zusammenfassung**

Die Erfindung betrifft nach einem Aspekt einen Tretroller (10), umfassend eine Fußplattform (12), eine an der Fußplattform gehaltene Steuer- oder/und Haltestange (20), wenigstens ein vorderes, gegebenenfalls mit der Steuer- oder/und Haltestange gekoppeltes oder koppelbares Laufrad (16) und wenigstens ein hinteres Laufrad. Nach einem Aspekt der Erfindung wird vorgeschlagen, dass wenigstens einem (16) der Laufräder ein zur Federung oder/und Dämpfung dienender Elastikkörper (68) zugeordnet ist, der in einem Aufnahmeraum angeordnet ist und zwischen einer laufradseitigen Angriffsfläche (60) einerseits und einer fußplattformseitigen oder/und stangenseitigen Angriffsfläche (66) andererseits elastisch komprimierbar ist.

## Beschreibung

Die Erfindung betrifft einen Tretroller, umfassend:
- eine Fußplattform,
- eine an der Fußplattform gehaltene Steuer- oder/und Haltestange,
- wenigstens ein vorderes, gegebenenfalls mit der Steuer- oder/und Haltestange gekoppeltes oder koppelbares Laufrad,
- wenigstens ein hinteres Laufrad.

Derartige Tretroller, beispielsweise des unter der Bezeichnung "Scooter" oder "Kickboard" bekannt gewordenen Typs, sind in jüngerer Zeit äußerst populär geworden, da sie eine mühelose Mobilität in der Großstadt, in weitläufigen Gebäudetrakten, auf Ausstellungsgeländen usw. versprechen. Als "Kickboard" werden in der Regel Roller bezeichnet, die in Abweichung von dem Aufbau eines herkömmlichen Tretrollers vorne zwei gefederte rollenartige Laufräder aufweisen, wobei der Roller durch Gewichtsverlagerung auf der Fußplattform nach links oder rechts gesteuert wird und insoweit eher einem Skatebord entspricht. Derartige Roller des "Kickboard"-Typs weisen in der Regel eine weniger zum Steuern als vielmehr zum Haltgeben vorgesehene Haltestange mit einem Halte- oder Steuerkopf am oberen Ende auf. Roller des "Scooter"-Typs entsprechen im Aufbau und in der Art und Weise des Steuerns herkömmlichen Tretrollern, sind aber in der Regel mit wesentlich kleineren Laufrädern (gegebenenfalls Doppel-Laufrädern) versehen. Regelmäßig weisen diese Roller eine teleskopierbare Steuer- oder/und Haltestange auf, die aus einer Fahrstellung, in der sie von der Fußplattform hochsteht, in eine der Fußplattform benachbarte Transportstellung klappbar ist.

Aufgrund ihrer kleinen Laufräder ist der Fahrkomfort der bekannten Roller auf nicht ideal ebenem Untergrund nicht befriedigend. Dies gilt auch für die Roller des "Kickboard"-Typs mit gefederten Laufrädern, bei denen überdies die Federung mechanisch vergleichsweise aufwendig ist.

Nach einem Aspekt trachtet die Erfindung, für derartige Roller des "Scooter"-oder "Kickboard"-Typs sowie allgemein für Tretroller eine mechanisch einfache und trotzdem wirkungsvolle Laufradfederung bereitzustellen. Hierzu schlägt die Erfindung vor, dass wenigstens einem der Laufräder ein zur Federung oder/und Dämpfung dienender Elastikkörper zugeordnet ist, der in einem Aufnahmeraum angeordnet ist und zwischen einer laufradseitigen Angriffsfläche einerseits und einer fußplattformseitigen oder/und stangenseitigen Angriffsfläche andererseits elastisch komprimierbar ist. Es hat sich nämlich gezeigt, dass durch Einsatz eines derartigen Elastikkörpers eine hoch wirkungsvolle Laufradfederung bereitgestellt werden kann, die mechanisch einfach aufgebaut und dementsprechend kostengünstig sein kann. Der Elastikkörper kann ein elastischer Kunststoffkörper sein. Es wird speziell an eine Ausbildung des Elastikkörpers aus einem geschlossenporigen Kunststoffschaum gedacht, wobei es sich als zweckmäßig herausgestellt hat, einen PUR-Schaum zu verwenden.

Die Verwendung eines geschlossenporigen Kunststoffschaums ist insoweit besonders vorteilhaft, dass der Kunststoffschaum eine stark progressive Federkernlinie aufweist und über wirkungsvolle Dämpfungseigenschaften verfügt. Je nach Auslegung der Federung in Bezug auf etwa das Körpergewicht eines Benutzers kann ein geeignetes spezifisches Gewicht für den Kunststoffschaum vorgesehen werden. Für einen PUR-Schaum kann als Anhaltspunkt für eine entsprechende Optimierung des spezifischen Gewichts und damit der Federungs- und Dämpfungseigenschaften ein spezifisches Gewicht von etwa 600 bis 650 g/dm³ (600 bis 650 g/Liter) angegeben werden.

Eine vorteilhafte Ausführungsform des Tretrollers zeichnet sich dadurch aus, dass der vorzugsweise zylinderförmige Elastikkörper in einen Zylinderraum eines Zylinder-Kolben-Geräts zwischen einem eine der Angriffsflächen aufweisenden Kolben einerseits und einem die andere Angriffsfläche aufweisenden Zylinderende oder weiteren Kolben andererseits aufgenommen ist. Dabei kann das Zylinder-Kolben-Gerät einen als Zylinder dienenden Rohrabschnitt der Steuer- oder/und Haltestange umfassen. Der Kolben kann von einem das wenigstens eine vordere Laufrad haltenden Radhalter hochstehen und in den Zylinder eingreifen.

Es wird vorgeschlagen, dass der als Zylinder dienende Rohrabschnitt in einem Lenkkopfrohr einer Drehlageranordnung aufgenommen ist, die die Steuer- oder/und Haltestange an der Fußplattform drehbar lagert. Der mechanische Aufwand für die Laufradfederung ist dann besonders gering und das äußere Erscheinungsbild des Tretrollers ist durch die Laufradfederung nicht beeinträchtigt.

Um gewünschte Federungs- und Dämpfungseigenschaften zu erreichen, kann eine Vorspann-Anordnung zum gezielten Vorspannen des Elastikkörpers vorgesehen sein. Die Vorspannanordnung kann einen Anschlag umfassen, der eine Mindest-Einfahrposition des Kolbens beziehungsweise eines der Kolben in den Zylinder und damit eine Vorspannung des Elastikkörpers definiert. Die gewünschte Vorspannung des Elastikkörpers und damit die Federungs- und Dämpfungseigenschaften können einstellbar sein, vorzugsweise durch Verstellen oder/und Auswechseln des Anschlags oder/und Auswechseln des Elastikkörpers. Beispielsweise kann der Anschlag von einer axial positionierbaren Hülse gebildet sein, durch die sich der Kolben oder eine diesem zugeordnete Kolbenstange erstreckt.

Zur Übertragung von Lenkmomenten von der Steuer- oder/und Haltestange auf den Radhalter kann eine Kniehebelanordnung vorgesehen sein. Eine andere Möglichkeit ist, eine eine Schiebeführung umfassende Drehmitnahmeverbindung zwischen dem Radhalter und der Steuer- oder/und Haltestange vorzusehen. Die Schiebeführung kann beispielsweise von dem Zylinder und dem Kolben selbst gebildet sein, die dann einen nicht-kreisförmigen Querschnitt aufweisen.

Nach einem zweiten unabhängigen Aspekt der Erfindung wird für den eingangs genannten Tretroller vorgeschlagen, dass wenigstens ein Laufrad einen auf eine Radfelge gehaltenen ringförmigen Radkern aus einem niedershoreigen Laufradmaterial und einem auf dem Radkern angeordneten, eine Lauffläche aufweisenden Laufring aus einem hochshoreigen Laufradmaterial aufweist. Der niedershoreige Kern sorgt für eine dem Rad inhärente Federung. Da der Laufring aus hochshoreigem Laufradmaterial besteht, ist die Lauffläche gleichwohl hinreichend abriebbeständig. Als Laufradmaterial kommt speziell ein Gummimaterial oder Kunststoffmaterial in Betracht. Der Radkern und der Laufring können durch Vulkanisation miteinander verbunden sein.

Nach einem weiteren unabhängigen Aspekt wird für den eingangs genannten Tretroller vorgeschlagen, dass die Fußplattform federnd ausgebildet oder/und nach oben gewölbt ausgeführt ist. Durch die federnde Ausbildung der Fußplattform können Stöße aufgenommen werden, insbesondere Stöße, die vom wenigstens einen hinteren Laufrad kommen. Die gewölbte Form der Trittbrettes ist insbesondere dann vorteilhaft, wenn entsprechend dem ersten Erfindungsaspekt das vordere Laufrad einfedern kann. Die gewölbte Form der Füße (des Trittbrettes) kann dann verschiedene Einfederhöhen am vorderen Laufrad kaschieren beziehungsweise nicht so deutlich sichtbar machen.

Nach einem weiteren unabhängigen Aspekt der Erfindung wird für den eingangs genannten Tretroller vorgeschlagen, dass eine dem wenigstens einen hinteren Laufrad zugeordnete Bremsanordnung vorgesehen ist. Nach dem Erfindungsvorschlag zeichnet sich die Bremsanordnung dadurch aus, dass sie ein Bremsblech aufweist, das in Fahrtrichtung hinter dem zugeordneten Laufrad an einem Bremsblechhalter gehalten ist und beim Bremsen durch reibschlüssigen Eingriff mit dem Laufrad auf Zug belastet wird. Das Bremsblech wird also erfindungsgemäß beim Bremsvorgang gezogen und nicht geschoben. Es treten dann keine hochfrequenten Spannungsspitzen am Laufrad auf, die die Lauffläche des Laufrads beschädigen könnten. Das Bremsblech kann an einem das betreffende hintere Laufrad haltenden Radhalter gehalten sein, der dann dementsprechend als Bremsblechhalter dient.

Nach einem weiteren unabhängigen Aspekt schlägt die Erfindung für den eingangs genannten Tretroller vor, dass eine dem wenigstens einen hinteren Laufrad zugeordnete Bremsanordnung vorgesehen ist, die ein Bremsblech mit zwei gegenüber einer Laufradachse in entgegengesetzten Richtungen geneigten Reibflächen aufweist. Die Reibflächen sind erfindungsgemäß mit Laufradflanken des betreffenden Laufrads in reibschlüssigen Eingriff bringbar. Durch die beschriebene Ausbildung des Bremsblechs wird erreicht, dass die Lauffläche beim Bremsen geschont wird, da der Abrieb durch die Bremsung primär an den Radflanken stattfindet. Überdies kommt es aufgrund eines Keileffekts zu einer Verstärkung der Bremskraft, so dass der Tretroller wirkungsvoll über eine vergleichsweise kurze Bremsstrecke abbremsbar ist.

Die Erfindung betrifft nach einem anderen Aspekt ferner einen zusammenklappbaren Roller, umfassend
- eine Fußplattform,
- eine gewünschtenfalls teleskopierbare Steuer- oder/und Haltestange, die zum Transport des Rollers aus einer Fahrstellung, in der sie von der Fußplattform hochsteht, in eine der Fußplattform benachbarte Transportstellung klappbar ist,
- wenigstens ein vorderes, gegebenfalls mit der Steuer- oder/und Haltestange gekoppeltes oder koppelbares Laufrad,
- wenigstens ein hinteres Laufrad.

Derartige Roller des beispielsweise unter der Bezeichnung "Scooter" oder "Kickboard" bekannt gewordenen Typs sind in jüngerer Zeit äußerst populär geworden, da sie eine mühelose Mobilität in der Großstadt, in weitläufigen Gebäudetrakten, auf Ausstellungsgeländen usw. versprechen. Als "Kick-board" werden in der Regel Roller bezeichnet, die in Abweichung von dem Aufbau eines herkömmlichen Tretrollers vorne zwei gefederte rollenartige Laufräder aufweisen, wobei der Roller durch Gewichtsverlagerung auf der Fußplattform nach links oder rechts gesteuert wird und insoweit eher einem Skateboard entspricht. Derartige Roller des "Kickboard"-Typs weisen in der Regel eine weniger zum Steuern als vielmehr zum Haltgeben vorgesehene Haltestange mit einem Halte- oder Steuerkopf am oberen Ende auf. Roller des "Scooter"-Typs entsprechen im Aufbau und in der Art und Weise des Steuerns herkömmlichen Tretrollern, sind aber in der Regel mit wesentlich kleineren Laufrädern versehen und auf die angegebene Weise zusammenklappbar.

Gedacht sind die Roller der angegebenen Art für Strecken mittlerer Länge, die man normalerweise zu Fuß zurücklegen würde. Ist ein weiteres Rollerfahren nicht möglich, weil etwa der Untergrund nicht ausreichend glatt ist oder man beispielsweise in eine U-Bahn einsteigen möchte, lassen sich die Roller mit wenigen Handgriffen zusammenklappen und können dann wie ein handliches Gepäckstück mitgeführt werden.

Hierfür werden beispielsweise Tragerucksäcke und gesonderte Tragebänder angeboten, die beim Rollern vom Benutzer mitzuführen sind, der Tragerucksack zweckmäßigerweise auf dem Rücken und das Tragband in einer mitzuführenden Tasche oder dgl. Naturgemäß ist dann die Transportkapazität für andere mitzuführende Gegenstände beschränkt. Das Erfordernis, einen Rucksack oder ein gesondertes Tragband mitzuführen, wird häufig als lästig empfunden werden, und man mag sich dazu entscheiden, den Roller lieber ohne derartige Hilfsmittel auf fußläufigen Strecken zu transportieren.

Bekannt sind auch Tretroller etwa des "Scooter"-Typs, bei denen am oberen Ende und am unteren Ende der Steuerstange ein Tragband mit einem jeweiligen Ende befestigt ist, dessen Länge sich ähnlich wie der Tragriemen einer Umhängetasche in der Länge verstellen lässt. Beim Rollern wird die Länge des Tragbands so eingestellt, dass das Tragband im Wesentlichen straff parallel zur ausgezogenen Steuerstange verläuft und damit beim Rollern möglichst wenig hinderlich ist. Klappt man den Roller zusammen und schiebt die Steuerstange ineinander, bildet das Tragband eine Tragschlaufe, die in der Länge aber in der Regel nicht auf die Person abgestimmt ist, die den Roller transportieren möchte. Man wird dann also stets erneut, bei jedem Zusammenklappen des Rollers und Einziehen der Steuerstange, die effektive Länge des Tragbands erneut einstellen müssen. Umgekehrt wird man beim Fahrbereitmachen des Rollers stets die Tragbandlänge wieder an die Länge der ausgezogenen Steuerstange anpassen müssen.

Demgegenüber schlägt die Erfindung vor, dass der Roller eine Tragbandeinrichtung aufweist, die ein Tragband zum Tragen des zusammengeklappten Rollers umfasst, das aus einer an einem Teil des Rollers dauerhaft angeordneten oder in den Roller integrierten Tragbandaufnahme ausziehbar und in die Tragbandaufnahme einziehbar ist. Nach einer ersten Ausführungsmöglichkeit weist das Tragband an einem freien Ende ein Koppelglied auf, das mit einem dauerhaft an einem Teil des Rollers angeordneten oder in den Roller integrierten Gegenkoppelglied koppelbar ist, um eine Tragschlaufe zu bilden. Nach einer zweiten Ausführungsmöglichkeit ist das Tragband in Form einer Tragschlaufe aus der Tragbandaufnahme ausziehbar und in die Tragbandaufnahme einziehbar.

Durch die Tragbandeinrichtung des Rollers ist der Transport des zusammengeklappten Rollers wesentlich erleichtert. Eine gesonderte Tragvorrichtung braucht nicht mitgeführt zu werden. Beispielsweise kann die Tragbandeinrichtung dafür ausgelegt sein, dass man den Roller in der Art einer Tragtasche mit Schulterband trägt, also das Tragband (ggf. nach Verkopplung des Koppelglieds mit dem Gegenkoppelglied) über die Schulter hängt. Zum Rollern wird das Tragband in die Tragbandaufnahme eingezogen, so dass das Tragband nicht stört, das Rollern also völlig unbeeinträchtigt ist. Die Transportkapazität für den Rollerfahrer ist wesentlich vergrößert, da er nunmehr keinen gesonderten Rucksack und kein gesondertes Tragband für den Rollertransport mit sich führen muss. Statt dessen kann er einen Rucksack zum Transport anderer Gegenstände mit sich führen.

Weiterbildungen des erfindungsgemäßen Rollers und der erfindungsgemäßen Tragbandeinrichtung sind in den Unteransprüchen angegeben.

Die Erfindung betrifft auch eine Tragbandeinrichtung zum Bestücken eines zusammenklappbaren Rollers der genannten Art, ggf. zum Anbringen an den Roller bzw. zum Integrieren in diesen. Erfindungsgemäß umfasst die Tragbandeinrichtung ein Tragband zum Tragen des zusammengeklappten Rollers, das aus einer an einem Teil des Rollers dauerhaft anbringbaren Tragbandaufnahme ausziehbar und in die Tragbandaufnahme einziehbar ist oder das derart in den Roller integriert ist, dass es aus einer als Tragbandaufnahme dienenden Komponente des Rollers ausziehbar und in diese einziehbar ist. Nach einer ersten Ausführungsmöglichkeit weist das Tragband an einem freien Ende ein Koppelglied auf, das mit einem dauerhaft an einem Teil des Rollers anbringbaren Gegenkoppelglied der Tragbandvorrichtung oder einem mit dem Roller integralen Gegenkoppelglied koppelbar ist, um eine Tragschlaufe zu bilden. Nach einer zweiten Ausführungsmöglichkeit ist das Tragband in Form einer Tagschlaufe aus der Tragbandaufnahme ausziehbar und in die Tragbandaufnahme einziehbar. Mittels einer erfindungsgemäßen Tragbandvorrichtung kann ein herkömmlicher Roller der eingangs genannten Art zu einem erfindungsgemäßen Roller nachgerüstet werden. Bevorzugte Weiterbildungen der Tragbandeinrichtung sind in den Unteransprüchen angegeben.

Von den vielen Möglichkeiten, wo die Tragbandaufnahme am Roller angeordnet sein könnte, ist es insbesondere bevorzugt, die Tragbandaufnahme an der Steuer- oder/und Haltestange (gegebenenfalls in diese integriert), an einer quer zur Steuer- oder/und Haltestange verlaufenden Lenkerstangenanordnung (gegebenenfalls in diese integriert), an oder in einem Steuer- oder/und Haltekopf der Steuer- oder/und Haltestange oder im Bereich der Fußplattform oder an der Fußplattform (gegebenenfalls in diese integriert) anzuordnen. Betreffend die letztgenannte Möglichkeit ist es insbesondere bevorzugt, die Tragbandaufnahme in einem Profilkanal eines die Fußplattform bildenden oder abstützenden Tragprofils aufzunehmen, beispielsweise in einen nach unten offenen Profilkanal des Tragprofils. Die Tragbandaufnahme kann in diesem beispielsweise U-förmigen Profilkanal festgeschweißt, festgeschraubt oder in Presssitz gehalten sein. Die letztgenannte Möglichkeit (also das Festspannen der Tragbandaufnahme im Profilkanal) ist insbesondere für die Nachrüstung von herkömmlichen Rollern mit einer erfindungsgemäßen Tragbandeinrichtung von Interesse.

Besonders zweckmäßig ist, eine gemäß einer Rollerkonstruktion sowieso vorhandene Komponente als Tragbandaufnahme zu nutzen. Hierzu wird als besonders bevorzugt vorgeschlagen, das als Tragbandaufnahme wenigstens ein Profilkanal eines Tragprofils, insbesondere eines die Fußplattform bildenden oder abstützenden Tragprofils dient. Im Falle des in Form einer Tragschlaufe aus der Tragbandaufnahme ausziehbaren und in die Tragbandaufnahme einziehbaren Tragbands kann die Tragbandaufnahme von zwei nebeneinander verlaufenden Profilkanälen des Tragprofils gebildet sein, die jeweils einen Abschnitt des Tragbands aufnehmen. Durch die Verwendung des wenigstens einen Profilkanals als Tragbandaufnahme werden Kostenvorteile erreicht und Bauraum für eine gesonderte Tragbandaufnahme eingespart. Überdies werden die designerischen Qualitäten des Rollers nicht durch eine zusätzliche Tragbandaufnahme beeinträchtigt.

Es wird noch darauf hingewiesen, dass die hier verwendeten Begriffe "dauerhaft angeordnet" und "dauerhaft anbringbar" nicht ausschließen, dass eine Entfernung der Tragbandaufnahme bzw. des Gegenkoppelglieds vom Roller möglich ist, beispielsweise unter Einsatz eines entsprechenden Werkzeugs. Gemeint ist vielmehr, dass Maßnahmen getroffen sind, dass die Tragbandaufnahme bzw. das Gegenkoppelglied beim Fahren mit dem Roller am jeweils zugeordneten Rollerteil angeordnet bzw. angebracht bleiben und zumindest eine gewisse Verlustsicherung gewährleistet ist. Abgegrenzt werden soll gegenüber herkömmlichen Tragbändern, die erst zum Rollertransport dem Roller zugeordnet werden. Im Rahmen der Erfindung liegt also sowohl, dass die Tragbandaufnahme und das Gegenkoppelglied feste Bestandteile des Rollers sind, als auch, dass diese Elemente am Roller auf irgendeine Weise befestigt werden, beispielsweise mittels üblichen Befestigungsmitteln wie Schellen, Schrauben und dgl.

Es sei dennoch darauf hingewiesen, dass der hier verwendete Begriff "Tragband" und entsprechend der in den Unteransprüchen verwendete Begriff "Einziehband" keine spezielle Querschnittsform implizieren. So können das Tragband beziehungsweise das Einziehband durchaus einen kreisförmigen Querschnitt aufweisen und beispielsweise schnurähnlich ausgeführt sein. Aus Komfortgründen ist es aber durchaus zweckmäßig, einen flachen Querschnitt für das Tragband vorzusehen, damit das Tragband flächig etwa auf der Schulter aufliegt und nicht einschnürt. Aus Komfortgründen kann das Tragband mit einem flächigen Auflageelement, gegebenenfalls einem Auflagepolster, versehen sein, über das sich das Tragband etwa auf der Schulter flächig abstützt und so nicht einschnürt. Derartige Auflageelemente sind bei Tragbändern von Sporttaschen oder Phototaschen weit verbereitet. Da das Gewicht eines Rollers des "Scooter"- oder "Kick-Board"-Typs nicht sehr groß ist, kann als Auflageelement an Stelle eines biegsamen Elements auch ein starres Element verwendet werden. Das Auflageelement kann in die sich des Außenumrisses an den Querschnitt der Fußplattform beziehunsweise des Tragprofils angepasst sein und im in die Tragbandaufnahme eingezogenen Zustand des Tragbands an einem Ende des Profils beziehungsweise der Fußplattform anliegen und mit dessen Außenumriss fluchten, so dass das Auflageelement quasi als die Fußplattform beziehungsweise das Tragprofil verlängenders Abschlußelement dient.

Die Erfindung wird im Folgenden anhand in den Figuren gezeigten Ausführungsbeispielen näher erläutert.
- Fig. 1: zeigt ein Ausführungsbeispiel eines erfindungsgemäßen Tret rollers.

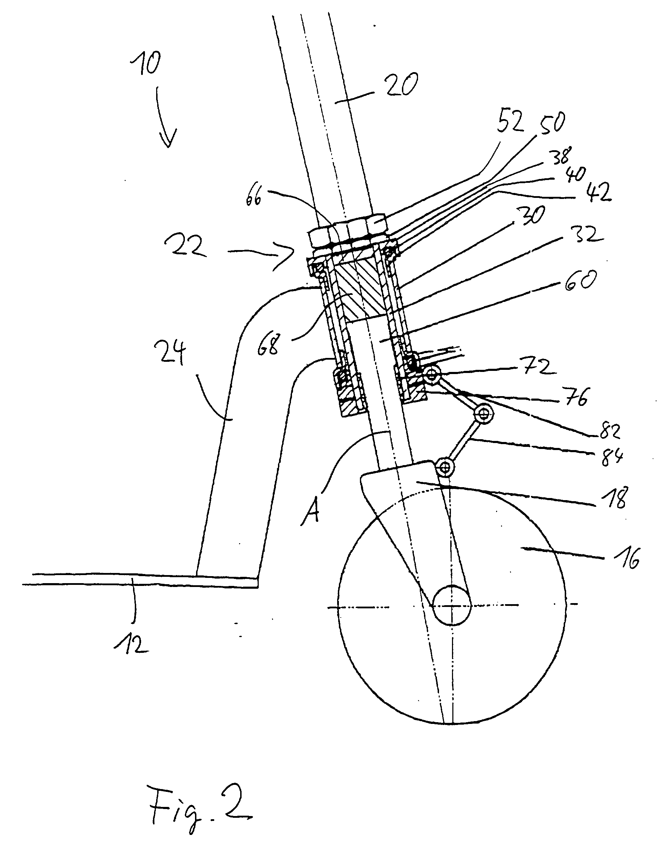

- Fig. 2: zeigt in einer teilgeschnittenen Ansicht einen vorderen Bereich des Tretrollers.
- Fig. 3: zeigt den in Fig. 2 geschnitten dargestellten Bereich, nämlich den Bereich einer zwischen einer Fußplattform des Rollers und einer Steuerstange des Tretrollers wirksamen Drehlageranord nung, in einer Vergrößerung.
- Fig. 4: zeigt einen Lenkmomente zu einer Gabel eines vorderen Lauf rads des Tretrollers übertragenden Kniehebel, und zwar in Fig. 4a) in einer Draufsicht und in Fig. 4b) in einer geschnittenen Darstellung nach Linie B-B in Fig. 4a).
- Fig. 5: zeigt ein vorderes oder hinteres Laufrad des Rollers in einer geschnittenen Darstellung.
- Fig. 6: zeigt ein Ausführungsbeispiel eines Rollers des "Scooter"-Typs mit einer in eine Lenkerstangenanordnung integrierten Tragbandaufnahme;
- Fig. 7: zeigt den Roller der Fig. 6 im zusammengeklappten Zustand und einem aus der Tragbandaufnahme ausgezogenen Trag-band, das eine Tragsschlaufe bildet;
- Fig. 8: zeigt einen Halte- oder Steuerkopf eines Rollers des "Kick-board"-Typs mit integrierter Tragbandaufnahme;
- Fig. 9: zeigt schematisch einen Tragband-Aufroller mit Tragband-Einzieh-Federanordnung und Tragband-Fixiereinrichtung;
- Fig. 10: veranschaulicht eine weitere Möglichkeit der Ausgestaltung einer Tragband-Fixiereinrichtung;
- Fig. 11: veranschaulicht eine Möglickeit, wie eine Tragbandaufnahme in einem U-förmigen Profilkanal eines eine Fußplattform bildenden Tragprofils aufgenommen sein könnte;
- Fig. 12: zeigt ein Ausführungsbeispiel eines Rollers des "Scooter"-Typs mit einer in einer Fußplattform integrierten Tragband-aufnahme, wobei das Tragband in Form einer Tragschlaufe aus der Tragbandaufnahme ausziehbar und in die Tragband-aufnahme einziehbar ist;
- Fig. 13: zeigt in Figur 13 eine Endansicht der Fußplattform mit Schnitt durch das Tragband und in Figur 13b einen Schnitt nach Linie B - B in Figur 13a durch die Fußplattform;
- Fig. 14: zeigt einen vorderen Endbereich der Fußplattform gemäß Figur 13b samt des eine Tragschlaufe bildenden Tragbands und einem Auflageelement, durch das das Tragband geführt ist.
- Fig. 15: veranschaulicht eine weitere Möglichkeit, wie eine Tragband-aufnahme in einen Roller integriert sein könnte, und zwar speziell in einen oberen T-Stück-Abschnitt der Steuerstange des Rollers.

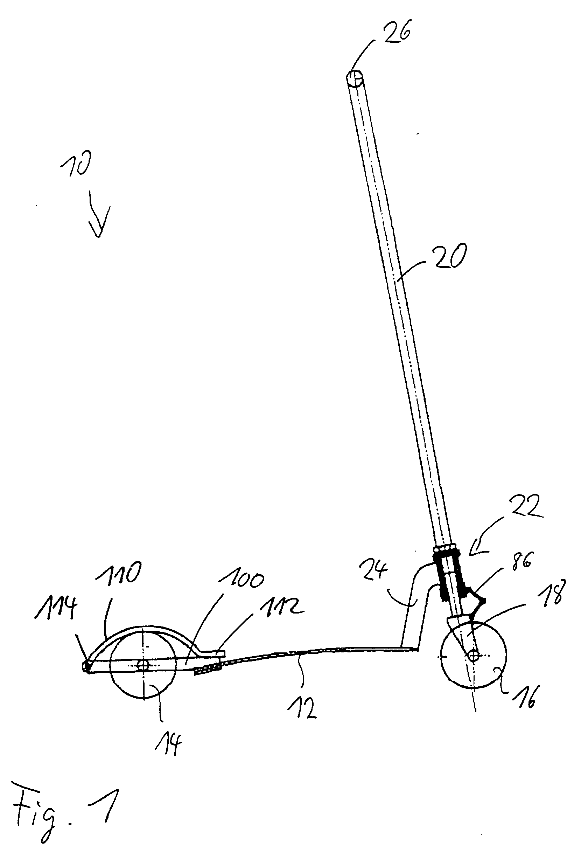

Ein Ausführungsbeispiel eines erfindungsgemäßen Tretrollers 10 ist in Fig. 1 gezeigt. Es kann sich beispielsweise um einen Roller des "Scooter"-Typs handeln. Der Roller 10 weist eine Fußplattform 12 und ein daran vermittels eines Radhalters 100 drehbar gelagertes hinteres Laufrad 14 auf. Ein vorderes Laufrad 16 ist an einer Gabel 18 drehbar gelagert, die vermittels eines Kniehebels 86 mit dem unteren Ende einer gewünschtenfalls teleskopierbaren Steuerstange 20 drehfest gekoppelt ist. Die Steuerstange 20 ist über eine Drehlageranordnung 22 am vorderen Ende der Fußplattform 12 drehbar gehalten, beispielsweise mittels einer vom vorderen Ende der Fußplattform 12 hoch und vorstehenden Halteanordnung 24, die gewünschtenfalls einen Klappmechanismus aufweisen kann, um beispielsweise zum Transport des Rollers die Steuerstange 20 an die Fußplattform 12 beiklappen zu können. Am oberen Ende der Steuerstange 20 ist eine Lenkerstangenanordnung 26 vorgesehen, die einen linken und einen rechten Handgriff aufweist.

Die Drehlageranordnung 22 weist ein an der Halteanordnung 24 gehaltenes Lenkkopfrohr 30 auf, in das ein unterer Rohrabschnitt 32 der auch als Lenkrohr bezeichenbaren Steuerstange 20 eingreift. Die Steuerstange 20 ist unter Vermittlung eines oberen Drehlagers 34 und eines unteren Drehlagers 36 am Lenkkopfrohr 30 drehbar gelagert. Das obere Drehlager 34 umfasst eine obere Lagerschale 38, eine untere Lagerschale 42 und einen zwischen den beiden Lagerschalen angeordneten Kugellagerkäfig 40 mit Lagerkugeln. Die untere Lagerschale 36 umfasst eine obere Lagerschale 44, eine untere Lagerschale 48 und einen zwischen den beiden Lagerschalen angeordneten Kugellagerkäfig 46 mit Lagerkugeln. Die untere Lagerschale 42 des oberen Drehlagers 34 und die obere Lagerschale 44 des unteren Drehlagers 36 weisen jeweils einen radial innen liegenden, in das Lenkkopfrohr 30 eingreifenden Halteflansch und einen radial außen liegenden, den betreffenden Kugellagerkäfig nach radial außen abstützenden Halteflansch auf. Das obere Drehlager 34 ist nach oben hin durch eine auf der oberen Lagerschale 28 aufliegende Einstellmutter 50 abgestützt, die unter Vermittlung einer Kontermutter 52 an der Steuerstange 20 gehalten ist. Das untere Drehlager 36 ist am Rohrabschnitt 32 durch eine zwischen der unteren Lagerschale 48 und dem Außenumfang des Rohrabschnitts 32 wirksame Reibungspassung oder Presssitzpassung gehalten.

Der Rohrabschnitt 32 dient als ein einen Zylinderraum oder Aufnahmeraum 64 begrenzender Zylinder. In den Zylinder 32 ist ein Kolben 60 aufgenommen, der von einem Endabschnitt einer von der Gabel 18 schräg nach oben vorstehenden Kolbenstange 62 gebildet ist. Zwischen dem Kolben 60 und einem am oberen Ende des Aufnahmeraums oder Zylinderraums 64 beispielsweise durch Festklemmen oder Festpunkten festgelegten Einsatzstück oder Stopfen 66 ist in den Aufnahmeraum 64 ein zylindrischer Elastikkörper 68 aufgenommen. Der Elastikkörper 68 ist vorzugsweise von einem geschlossenporigen Kuststoffschaum, gegebenenfalls PUR-Schaum, gebildet. Der Kunststoffschaum kann ein spezifisches Gewicht in der Größenordnung von 600 bis 650 g/dm³ (600 bis 650 g/Liter) aufweisen.

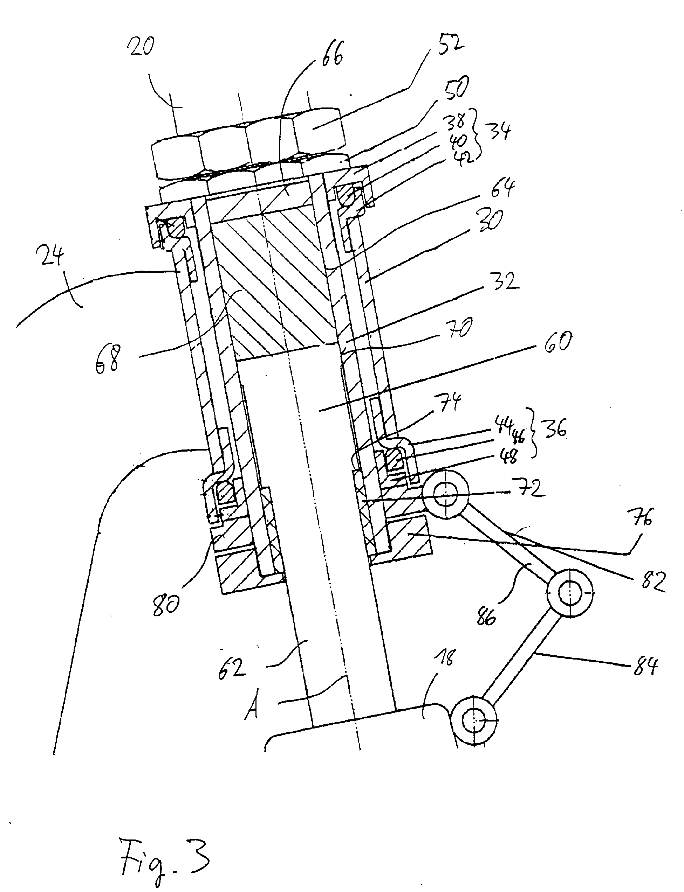

Der Kolben 60 und die Kolbenstange 62 sind verschieblich im Zylinderraum 64 geführt, und zwar einerseits an einer Ringumfangsfläche 70 am oberen Kolbenende und andererseits unter Vermittlung einer Lagerhülse 72 am Außenumfang der Kolbenstange 62. Radiale Kippmomente der Kolbenstange 62 relativ zum Zylinder 32 werden somit zuverlässig aufgenommen, ohne die Verschiebbarkeit des Kolbens 60 relativ zum Zylinder 32 zu beeinträchtigen. Es sei in diesem Zusammenhang darauf hingewiesen, dass in Fig. 3 ein Ringspalt zwischen dem Kolben 60 und der Innenumfangsfläche des Zylinders 32 unterhalb der Ringumfangsfläche 70 zu erkennen ist.

Der Elastikkörper 68 federt vom vorderen Laufrad 16 herrührende Stöße ab, indem der unter Einwirkung des Stoßes weiter in den Zylinderraum 64 einfahrende Kolben 60 unter elastischer Kompression des Elastikkörpers 68 elastisch und dämpfend durch den Elastikkörper 68 abgestützt wird. Der Elastikkörper 68 beziehungsweise dessen Kunststoffschaum weist vorzugsweise eine stark progressive Federkennlinie auf und sorgt für eine gegenüber der Reibung zwischen den bewegten Teilen zusätzlichen Dämpfung.

Für ein optimales Dämpfungs- beziehungsweise Federungsverhalten ist der Elastikkörper 68 im eingebauten Zustand vor Belastung des Rollers mit einer Person vorgespannt. Die Vorspannung wird auf den Kolben unter Vermittlung der Lagerhülse 72 (die alternativ auch aus zwei oder mehreren Teilschalen bestehen könnte) aufgebracht. Hierzu greift die Lagerhülse 72 an ihrem oberen Ende an einem Absatz 74 des Kolbens 60 an und drückt den Kolben gegen den Elastikkörper 68. An ihrem unteren Ende ist die Lagerhülse 72 an einer Vorspannmutter 76 abgestützt, die ein Innengewinde aufweist und mit diesem Innengewinde auf ein am unteren Ende des Zylinders 32 vorgesehenes Außengewinde aufgeschraubt ist. Je nachdem, wie weit die Vorspannmutter 76 auf den Zylinder 32 aufgeschraubt ist, ergibt sich eine unterschiedliche Vorspannung des Elastikkörpers 68. Fig. 3 zeigt eine Situation, in der für einen gegebenen Elastikkörper 68 und eine gegebene Lagerhülse 72 eine maximale Vorspannung für den Elastikkörper 68 eingestellt ist, da die Vorspannmutter 76 am unteren Ende des Zylinders 32 anschlägt.

Die Vorspannung des zur Federung dienenden Elastikkörpers 68 ist ein wichtiger Parameter für den erreichten Federungskomfort. Leichte Personen benötigen regelmäßig eine geringere Vorspannung der Federung als schwere Personen, da die Reaktion der Federung vom Gewicht der den Roller benutzenden Person abhängt. Bei einer leichten Person würde die Federung nicht hinreichend reagieren, wenn der Elastikkörper 68 stark vorgespannt ist. Andererseits würde im Falle einer weichen Vorspannung die Federung beim Besteigen des Rollers durch eine schwere Person einsinken und es würde bei jedem Anschubvorgang zur Fortbewegung (bei jeder abstoßenden Beinbewegung) aufgrund des dabei stattfindenden Lastwechsels auf das antreibende Beim eine Nickbewegung des Rollers auftreten. Es ist deshalb in der Regel sehr wichtig, dass die Vorspannung des Elastikkörpres 68 auf den Benutzer des Rollers abgestimmt ist. Dies kann zum einen über eine entsprechende Verdrehung der Vorspannmutter 76 erfolgen, wie vorstehend beschrieben, zum anderen erforderlichenfalls aber auch durch Verwendung von Austausch-Lagerhülsen 72 oder/und Austausch-Elastikkörpern 68, die eine Anpassung der Federungs- und Dämpfungseigenschaften an Benutzer mit stark unterschiedlichem Gewicht ermöglichen. Für eine stärkere Vorspannung der Federung kann ein axial längerer oder/und ein ein höheres spezifisches Gewicht aufweisender Elastikkörper 68 oder/und eine axial längere Lagerhülse 72 verwendet werden. Für eine geringere Vorspannung kann ein axial kürzerer oder/und ein geringeres spezifisches Gewicht aufweisender Elastikkörper 68 oder/und eine axial kürzere Lagerhülse 72 verwendet werden.

Eine Dreh- oder Lenkbewegung des vorderen Laufrads 10 relativ zum Roller und der den Roller benutzten Person wird durch die Steuerstange 20 eingeleitet, die dem Zylinder 32 eine Drehbewegung relativ zum Lenkkopfrohr 30 erteilt. An dem Außenumfang des Zylinders 32 ist ein Lenkring 80 drehfest festgelegt, beispielsweise festgeschweißt, von dem die betreffende Lenk-Drehbewegung über einen zwei Hebel 82 und 84 aufweisenden Kniehebel 86 auf die Gabel 18 übertragen wird. Der Kniehebel erlaubt eine Einfederbewegung des Kolbens 60 beziehungsweise der Kolbenstange 62 in den Zylinderraum 64 und überträgt unabhängig von der Einfederstellung das Lenkmoment vom Zylinder 32 auf die Gabel 18 des vorderen Laufrads.

Aufgrund der Verwendung des Kniehebels können der Zylinder 32, der Kolben 60, die Kolbenstange 62 und die Lagerhülse 62 als rotationssymmetrische Teile bezogen auf die Achse A ausgebildet sein, so dass die Einund Ausfederbewegung des Kolbens 60 nicht durch auftretende Torsionsmomente behindert oder gehemmt wird. Anstelle eines Kniehebels könnte auch eine den Zylinder mit der Gabel verbindende Schiebeführung vorgesehen sein, die den Zylinder und den Kolben beziehungsweise die Gabel drehfest miteinander verbindet, aber das Ein- und Ausfedern ermöglicht. Die Schiebeführung kann auch von dem Zylinder 32 und dem Kolben 60 beziehungsweise der Kolbenstange 62 samt der Lagerhülse 72 selbst gebildet sein, wenn man diese Teile als nicht-rotationssymmetrische Teile um die Achse A ausbildet.

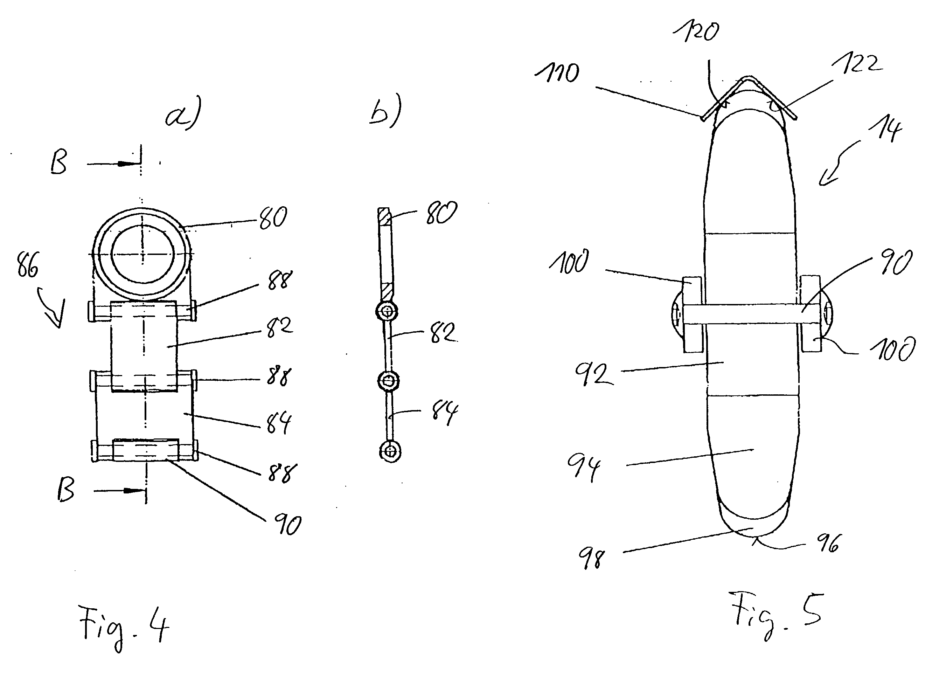

Zum Kniehebel 86 wird ergänzend auf Fig. 4 verwiesen, in der der Kniehebel samt zugeordneten Lagerbolzen 88 und einem Anschlussstück 90 der Gabel 18 sowie dem Lenkring 80 gezeigt ist.

Eine zusätzliche Federung wird beim erfindungsgemäßen Roller dadurch erhalten, dass für die Laufräder ein spezieller Radaufbau vorgesehen ist. Fig. 5 zeigt das hintere Laufrad 14. Entsprechendes gilt für das vordere Laufrad 16. Das Laufrad ist mittels einer Laufradachse 90 an dem Laufradhalter 100 (im Falle des vorderen Laufrads an der Gabel 18) gehalten und weist eine Laufradfelge 92 (beispielsweise aus Metall oder Kunststoff) auf, auf der ein ringförmiger Laufradkern 94 getragen ist, der radial außen einen eine Lauffläche 96 aufweisenden Laufring 98 trägt. Der Laufradkern 94 ist aus einem niedershoreigen Laufradmaterial, beispielsweise mit einer Shore-Härte von 45, ausgeführt, während der Laufring 98 aus einem hochshoreigen Laufradmaterial, beispielsweise mit einer Shore-Härte von 85 ausgeführt ist. Der niedershoreige Laufradkern 94 verleiht dem Laufrad Federungseigenschaften mit vergleichsweise weicher Federkernlinie, während der hochshoreige Laufring 98 dem Laufrad Abriebfestigkeit an der Lauffläche 96 verleiht. Bei dem Laufradmaterial kann es sich um ein Kunststoffoder Gummimaterial handeln. Der Laufradkern 94 und der Laufring 98 sind vorzugsweise durch Vulkanisation miteinander verbunden.

Einen weiteren Beitrag zur insgesamt erreichten Abfederung des Tretrollers wird dadurch erreicht, dass die Fußplattform 12 (das Trittbrett 12) in sich federn ausgeführt ist. Hierdurch werden vor allem Stöße aufgenommen, die vom hinteren Laufrad 14 über den am hinteren Ende der Fußplattform 12 angeordneten Laufradhalter 100 auf die Fußplattform 12 ausgeübt werden. In Fig. 1 ist überdies zu erkennen, dass die Fußplattform 12 nach oben leicht gewölbt ausgeführt ist. Hierdurch sollen verschiedene Einfederhöhen am vorderen Laufrad 16 optisch kaschiert werden.

Der Roller 10 weist eine Hinterradbremse auf, die ein mit dem hinteren Laufrad 14 zusammenwirkendes Bremsblech 110 aufweist, das ähnlich wie ein Schutzblech über einen oberen Umfangssektor des Laufrads 14 geführt ist. Das Bremsblech 110 ist bezogen auf die normale Fahrtrichtung des Rollers hinter dem hinteren Laufrad 14 am hinter das Laufrad 14 nach hinten vorstehenden Halter 100 befestigt, so dass beim Bremsen die zwischen dem Laufrad 14 und dem Bremsblech 110 auftretende Reibung das Bremsblech 110 auf Zug beansprucht, wobei die Zugkräfte vom Halter 100 aufgenommen werden. Zum Bremsen ist das federnd ausgeführte Bremsblech an einem vor dem Laufrad 14 angeordneten Betätigungsabschnitt 112 zu betätigen, indem der Betätigungsabschnitt 112 und damit das Bremsblech 110 mit dem Fuß nach unten gedrückt werden, wodurch das Bremsblech 110 zwischen dem Betätigungsabschnitt 112 und der hinter dem Laufrad 14 liegenden Befestigungsstelle 114 am Halter 100 gegen das Laufrad 14 gedrückt wird. Wird der Betätigungsabschnitt 112 nicht betätigt, federt das Bremsblech 110 ein Stück nach oben, so dass der reibschlüssige Eingriff zwischen dem Bremsblech 110 und dem Laufrad 14 aufgehoben wird.

Die Anordnung der Befestigungsstelle 114 hinter dem betreffenden Laufrad bezogen auf die Fahrtrichtung ist insoweit sehr vorteilhaft, als dass die mit dem Bremsblech 110 zusammenwirkende Reiboberfläche, gegebenenfalls die Radlauffläche, des betreffenden Laufrads geschont wird. Wäre nämlich die Befestigungsstelle in Fahrtrichtung vor dem Laufrad, so könnte es ähnlich wie beim Schieben eines Radiergummis über eine Oberfläche zu hochfrequenten Spannungsspitzen kommen, die die Reiboberfläche belasten und sogar zerstören könnten. Schiebt man nämlich ein Radiergummi über eine Oberfläche, so bleibt dieser an seinem momentanen Reibpunkt häufig stehen und wird zunehmend vorgespannt. Mit Erreichen einer kritischen Spannung löst sich der Radiergummi und federt nach vorne, worauf erneut Spannkraft aufgebaut wird. Das Nachvorneschnellen führt zu den erwähnten hochfrequenten Spannungsspitzen. Gleiches könnte bei einem Laufrad aus einem gummiartigen Material auftreten, wenn dieses durch ein Bremsblech reibschlüssig abgebremst wird, dessen Anlenk- oder Befestigungspunkt in Fahrtrichtung vor dem betreffenden Laufrad liegt. Ist hingegen, wie bei dem erfindungsgemäßen Tretroller die Anlenkstelle 114 des Bremsblechs 110 in Fahrtrichtung hinter dem Laufrad 14 angeordnet, so tritt beim Bremsen höchstens eine niederfrequente schwellende Spannung ähnlich wie bei einem gezogenen Radiergummi auf, die die Reibfläche nicht sonderlich belastet.

Eine besonders hohe Bremswirkung wird erreicht, wenn das Bremsblech 110 mit gegenüber der Laufradachse in entgegengesetzte Richtungen geneigten Reibflächen 120, 122 ausgeführt ist, von denen eine linke Reibfläche 120 mit der linken Laufradflanke und eine rechte Reibfläche 122 mit der rechten Laufradflanke in reibschlüssigen Bremseingriff bringbar ist. Es tritt dann nämlich ein die wirksame Anpresskraft der Reibflächen an das Laufrad verstärkender Keileffekt auf. Hierzu ist das Bremsblech 110 der Fig. 5 V-förmig ausgebildet. Neben der durch den Keileffekt erreichten "Bremskraftverstärkung" wird überdies erreicht, dass die Lauffläche 96 geschont wird, da der Abrieb durch die Bremsung primär an den Radflanken auftritt.

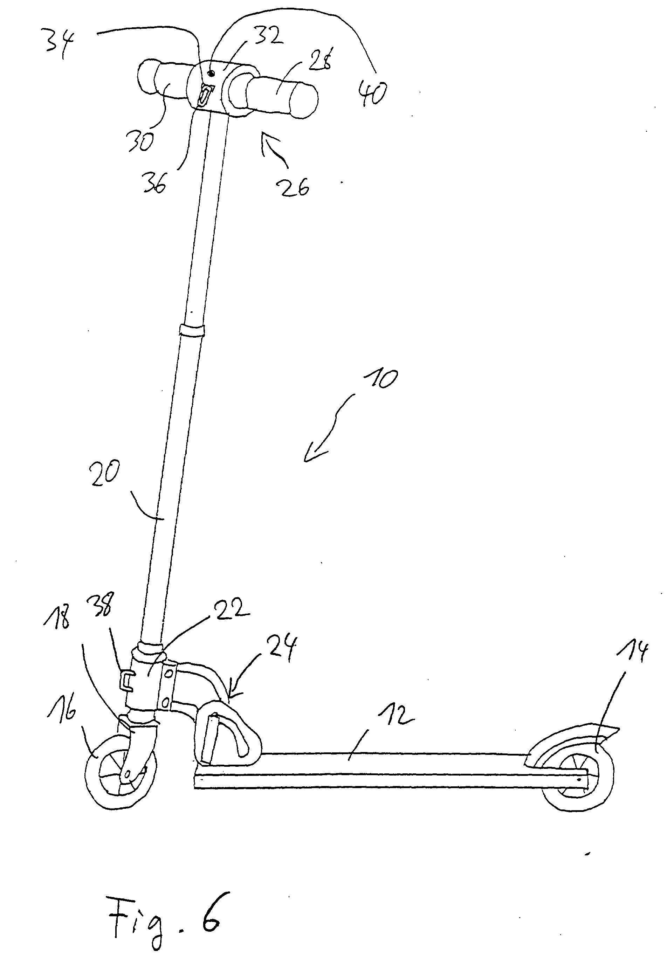

Ein Ausführungsbeispiel eines erfindungsgemäßen Tretrollers des "Scooter"- Typs ist in Fig. 6 gezeigt. Der Roller 10 weist eine Fußplattform 12 und ein daran drehbar gelagertes hinteres Laufrad 14 auf. Ein vorderes Laufrad 16 ist an einer Gabel 18 drehbar gelagert, die am unteren Ende einer teleskopierbaren Steuerstange 20 angeordnet ist. Die Steuerstange 20 ist in einer Lagerhülse 22 drehbar gelagert, die über einen Halte- und Klappmechanismus 24 am vorderen Ende der Fußplattform 12 gehalten ist. Am oberen Ende der Steuerstange ist eine Lenkerstangenanordnung 26 vorgesehen, die einen linken und einen rechten Handgriff 28,30 aufweist. Zwischen die beiden Handgriffe ist in die Lenkerstangenanordnung eine Tragbandaufnahme 32 integriert, die ein kreiszylindrisches Gehäuse aufweist. Durch eine Tragbandauslassöffnung 34 schaut ein an einem freien Ende eines Tragbands 42 angeordnetes Koppelglied 36 beispielsweise in Form eines Karabinerhakens oder dgl. hervor, das mit einem an der Lagerhülse 22 angeordneten Gegenkoppelglied 38 beispielsweise in der Form einer Öse koppelbar, beispielsweise in die Öse einhakbar ist, wenn das Tragband 42 entsprechend aus der Tragbandaufnahme 32 herausgezogen ist. In Fig. 6 ist oberhalb der Tragbandauslassöffnung 34 ein Betätigungsknopf 40 zu erkennen, der zur Betätigung einer Tragband-Fixiereinrichtung dient, die das aus der Aufnahme herausgezogene Tragband in einer gewünschten Auszugsstellung hält. Wird der Betätigungsknopf 40 gedrückt, so kann das Tragband 42 gegen die Wirkung einer Federanordnung eines in der Tragbandaufnahme gelagerten Tragband-Aufrollers aus der Aufnahme herausgezogen werden bzw. wird das ausgezogene Tragband unter der Wirkung der Federanordnung auf den Tragband-Aufroller aufgewickelt und damit in die Tragbandaufnahme 32 eingezogen.

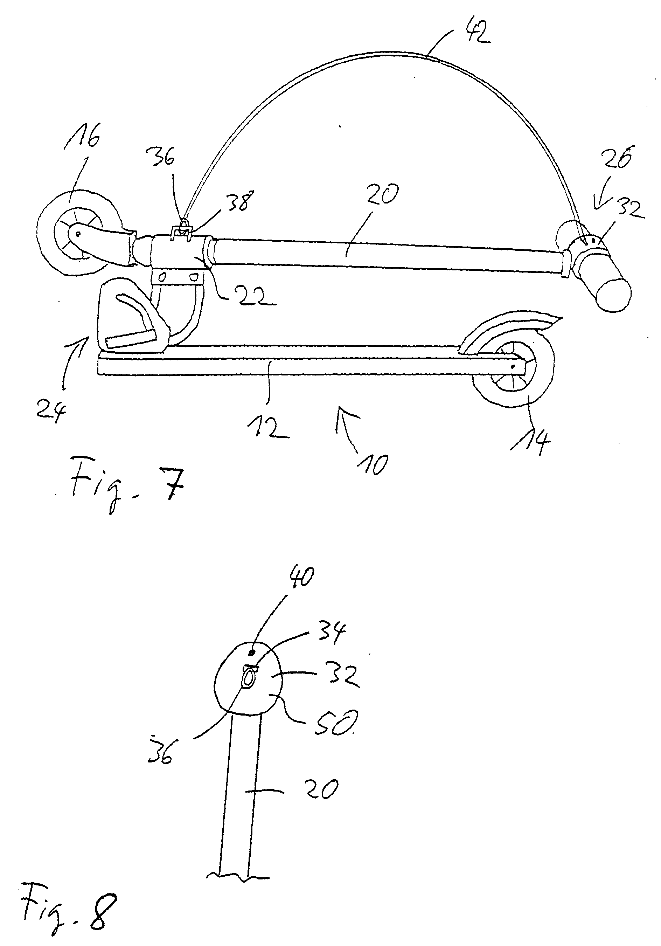

Fig. 7 zeigt den Roller 10 im zusammengeklappten Zustand, wobei die teleskopierbare Steuerstange 20 zusammengeschoben ist. Das Tragband 42 ist aus der Aufnahme 32 herausgezogen, und das Koppelglied 36 steht in Eingriff mit dem Gegenkoppelglied 38 (es ist also beispielsweise der Karabinerhaken 36 in die Öse 38 eingehakt). Wie in Fig. 7 zu erkennen, bildet das Tragband 42 eine Tragschlaufe, die es ermöglicht, den zusammengeklappten Roller über die Schulter zu hängen. Die Tragbandschlaufe kann dabei an die Körpergröße der betreffenden Person angepasst werden, indem das Tragband entsprechend aus der Tragbandaufnahme 32 ausgezogen bzw. in diese eingezogen wird. Der Halte- und Klappmechanismus 24 ist dafür ausgelegt, dass die Fußplattform 12 in der näherungsweisen Parallelstellung zur Steuerstange 20 bleibt, wenn der Roller am Tragband 42 hängt. Grundsätzlich wäre es möglich, das Tragband 42 durch eine Halteöse etwa im Endbereich der Fußplattform 12 nahe dem hinteren Laufrad zu führen, so dass das Tragband 42 von der Tragbandaufnahme 32 durch diese Öse zum Gegenkoppelglied 38 verläuft und dementsprechend Gewichtskräfte der Fußplattform direkt aufnimmt unter Entlastung des Halte- und Klappmechanismus.

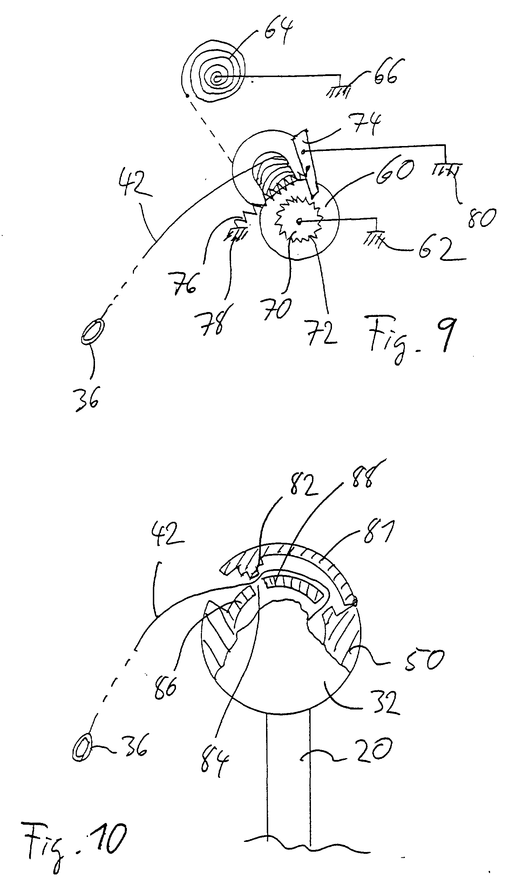

Fig. 8 zeigt das obere Ende einer Steuer- oder/und Haltestange 20 mit einem Steuer- oder Haltekopf 50, der auch als Steuer- oder Halteknopf bezeichnet werden könnte. Der Steuer- oder Haltekopf 50 dient als Tragbandaufnahme 32 im Sinne der Tragbandaufnahme 32 des Ausführungsbeispiels der Fig. 6 und 7. Der Kopf 50 weist dementsprechend eine Tragbandauslassöffnung 34 auf, durch die ein Koppelglied 36 am freien Ende eines Tragbands hervorschaut.

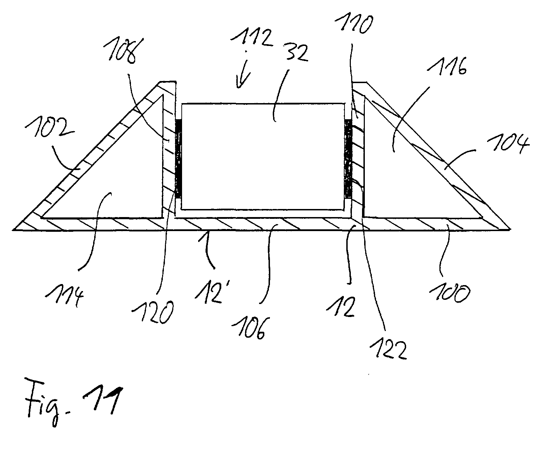

Fig. 9 zeigt schematisch eine Möglichkeit, wie eine Tragbandaufnahme ausgeführt sein könnte. Zum Aufwickeln des Tragbands ist ein Tragband-Aufroller in Form einer Wickelrolle 60 vorgesehen, die an einem Lager 62 drehbar gelagert ist. Die Aufwickelrolle 60 ist mit einer Spiralfeder 64 versehen, die an ihrem inneren Endabschnitt an einem gegenüber dem Aufroller 60 stationären Abschnitt 66 abgestützt ist und mit ihrem äußeren Ende am Aufroller derart angreift, dass die Feder bei einer Abwickel-Drehbewegung des Aufrollers gespannt und bei einer Aufwickel-Drehbewegung des Aufrollers entspannt wird.

Der Aufroller 60 weist ein Zahnrad 70 mit einer sägezahnartigen Verzahnung 72 auf, die mit einer Sperrklinke 74 zusammenwirkt, um eine Auszieh-Drehbewegung (also die genannte Abwickel-Drehbewegung) des Abrollers 60 zu sperren. Hierzu ist die Sperrklinke 74 mittels einer Feder 76 in eine Eingriffsvorstellung vorgespannt, in der die Sperrklinke 74 in die Verzahnung 72 eingreift. 78 und 80 bezeichnen gegenüber dem Aufroller 60 stationäre Halte- und Lagerpunkte für die Feder 76 und die Sperrklinke 74.

Der Mechanismus der Fig. 9 könnte beispielsweise Teil der TragbandAufnahme 32 der Fig. 6 - 8 sein. In diesem Fall könnte die Sperrklinke 74 mittels des Betätigungsknopfes 40 gegen die Wirkung der Feder 76 in eine Freigabestellung geschwenkt werden, in der die Sperrklinke nicht in die Verzahnung 72 eingreift. Das Tragband kann dann entgegen der Wirkung der Feder 64 vom Aufroller 60 abgerollt oder unter der Wirkung der Feder 64 auf den Aufroller 60 aufgerollt werden. Die Feder 64 kann derart dimensioniert sein, dass dann, wenn auf das Tragband 42 keine Ausziehkräfte wirken, der Roller also beispielsweise nicht am Tragband über einer Schulter oder dgl. hängt, die Federkraft der Spiralfeder 64 ausreicht, den Aufroller in Aufwickel-Drehrichtung zu drehen trotz Eingriffs der Sperrklinke 74 in die Verzahnung 72. In diesem Fall gleitet das vordere Ende der Sperrklinke 74 an den schrägen Flanken der Verzahnung 72 ab. Es kann aber auch vorgesehen sein, dass selbst bei maximal ausgezogenem Tragband 42 die Federkraft der Feder 64 zum Einziehen des Tragbands nicht ausreicht, sofern nicht die Sperrklinke 74 etwa mittels des Betätigungsknopfes 40 betätigt wird.

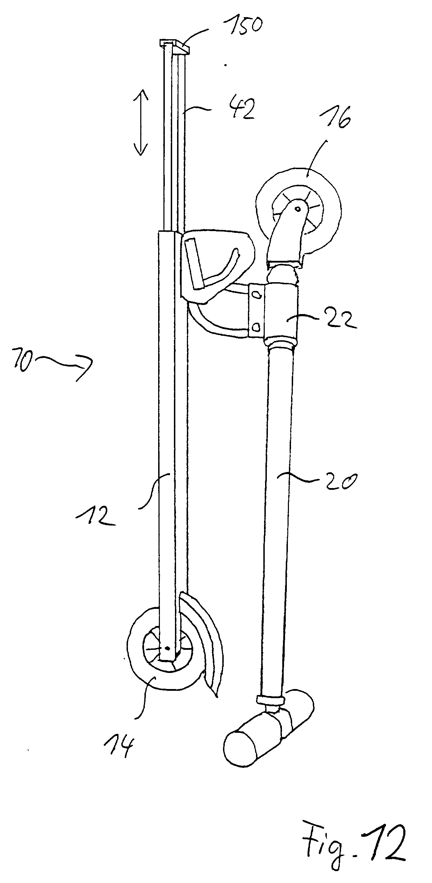

Fig. 10 zeigt eine andere Möglichkeit, wie ein Tragband in einer Soll-Ausziehstellung fixiert werden kann. Der Steuer- oder Halteknopf 50 weist einen daran schwenkbar gelagerten Deckel 81 auf, der einen Klemmabschnitt 82 aufweist, der bei geschlossenem Deckel 81 in eine Klemmausnehmung 84 eingreift und das Tragband 42 zwischen dem Klemmabschnitt 82 einerseits und die Ausnehmung 84 begrenzenden Wandabschnitten 86 des Kopfs 50 andererseits einklemmt. Im Inneren des Kopfes 50 könnte ein Mechanismus entsprechend Fig. 9 angeordnet sein, wobei auf die Sperrklinke 74 und das Zahnrad 70 aber verzichtet sein könnte.

Fig. 11 zeigt einen Querschnitt durch eine von einem Aluminium-Tragprofil gebildete Fußplattform 12 in einer Darstellung, bei der die Fußplattform-Standfläche zur Abstützung des Fußes des Rollerfahrenden nach unten weist. Für eine hohe Stabilität weist das einteilig ausgeführte Aluminiumprofil 100 einen ersten Dreiecks-Profilabschnitt 102 und einen zweiten Dreiecksprofilabschnitt 104 und einen mittleren U-Profilabschnitt 106 auf. Eine linke Profilwand 108 und eine rechte Profilwand 110 sind jeweils dem U-Profil und dem sich hieran anschließenden Dreiecksprofil zuzurechnen. Das U-Profil begrenzt einen nach unten (in Figur 11 nach oben) offenen Profilkanal 112. In den Dreiecksprofilabschnitten 102 und 104 ist jeweils ein seitlich, nach oben und unten geschlossener Profilkanal 114 bzw. 116 ausgebildet.

Eine Tragbandaufnahme beispielsweise mit einer der Anordnung gemäß Figur 9 entsprechenden Mechanik kann zweckmäßig in den Profilkanal 112 aufgenommen sein und dort auf geeignete Weise festgelegt sein. Beispielsweise könnte man ein Gehäuse der Tragbandaufnahme 32 mit den Seitenwänden 108 und 110 verschrauben. Eine andere Möglichkeit ist, die Tragbandaufnahme 32 beziehungsweise deren Gehäuse zwischen den Wänden 108 und 110 festzuspannen, beispielsweise unter Verwendung einer wagenheberähnlichen Festspannmechanik. Das Halten der Tragbandaufnahme im Presssitz im U-Kanal 112 ist in Figur 11 bei 120 und 122 symbolhaft dargestellt. Die Befestigung einer Tragbandaufnahme in einen derartigen Profilkanal durch Festspannen ist insbesondere vorteilhaft bei der Nachrüstung herkömmlicher Roller mit einer erfindungsgemäßen Tragbandeinrichtung, da dann keine Befestigungslöcher oder dergleichen gebohrt werden müssen.

Die Anordnung der Tragbandaufnahme und in entsprechender Weise vorzugsweise auch des Gegenkoppelglieds in einem an der Unterseite der Fußplattform ausgebildeten Profilkanal ist insoweit besonders vorteilhaft, als das hierdurch das äußere Erscheinungsbild des Rollers nicht beeinträchtigt wird, die Tragbandaufnahme also beim Rollern im wesentlichen verdeckt ist. Auch ergibt sich eine höhere Stabilität beim Tragen des zusammengeklappten Rollers, da der Roller dann, wenn er mit der Unterseite der Fußplattform etwa auf dem Rücken aufliegt, besseren Halt hat als wenn er mit der zusammengeschobenen Steuer- oder/und Haltestange auf dem Rücken aufliegen würde. Man wird in der Regel die Tragbandaufnahme 32 und das Gegenkoppelglied an entgegengesetzten Enden des Profilkanals anordnen, also beispielsweise die Tragbandaufnahme 32 in enger Nachbarschaft zum Hinterrad 14 und das Gegenkoppelglied am vorderen Ende der Tragplattform.

Im Hinblick auf einen Einsatz des Rollers auch bei nassem Untergrund beziehungsweise bei Regen ist es zweckmäßig, die Tragbandaufnahme 32 wasserdicht auszuführen und einen Spritzschutz etwa in Form eines den Profilkanal im Bereich der Tragbandaufnahme nach unten verschließenden Deckel vorzusehen, der beispielsweise entlang des Profils 100 verschiebbar ist, um in einer Abdeckstellung die Tragbandaufnahme 32 samt dem hieraus gegebenenfalls hervorstehenden Tragbandende gegen hochspritzendes Wasser zu schützen und in einer Tragestellung die Tragbandaufnahme und das Tragband zugänglich zu machen.

Als weitere Möglichkeit könnte man daran denken, die Profilkanäle 114 oder/und 116 als Platz für die Aufnahme eines (jeweiligen) Tragbands beziehungsweise dür die Anordnung einer Tragbandaufnahme zu nutzen. Es könnte insbesondere zweckmäßig sein, zwei Tragbänder vorzusehen, die ein rucksackartiges Tragen des zusammengeklappten Rollers ermöglichen. In diesem Fall kann man mit schmäleren Tragbändern auskommen, so dass die Profilkanäle 114 und 116 unter Umständen genügend Platz böten. Eine andere Möglichkeit ist, zwei Tragbandaufnahmen im Endbereich der Fußplattform seitlich neben dem hinteren Laufrad 114 anzuordnen. Im Falle eines Rollers mit einer Fußplattform beziehungsweise einem Träger entsprechend Fig. 11 könnten die Tragbandaufnahmen mit einem jeweiligen Einsteckkopf ausgeführt sein, der in die nach hinten offenen Enden der Profilkanäle 114 und 116 eingesteckt werden und dann dort in Presssitz gehalten werden. Man könnte dann daran denken, die Tragbänder durch die Einsteckköpfe und die Profilkanäle 114 und 116 zum vorderen Ende der Fußplattform zu führen, so dass die Tragbandauslassöffnungen für die Tragbänder gewissermaßen am vorderen Ende der Fußplattform vorgesehen sind. Die Tragbänder würden also durch die Profilkanäle 114 und 116 hindurch aus der jeweiligen Tragbandaufnahme ausgezogen werden.

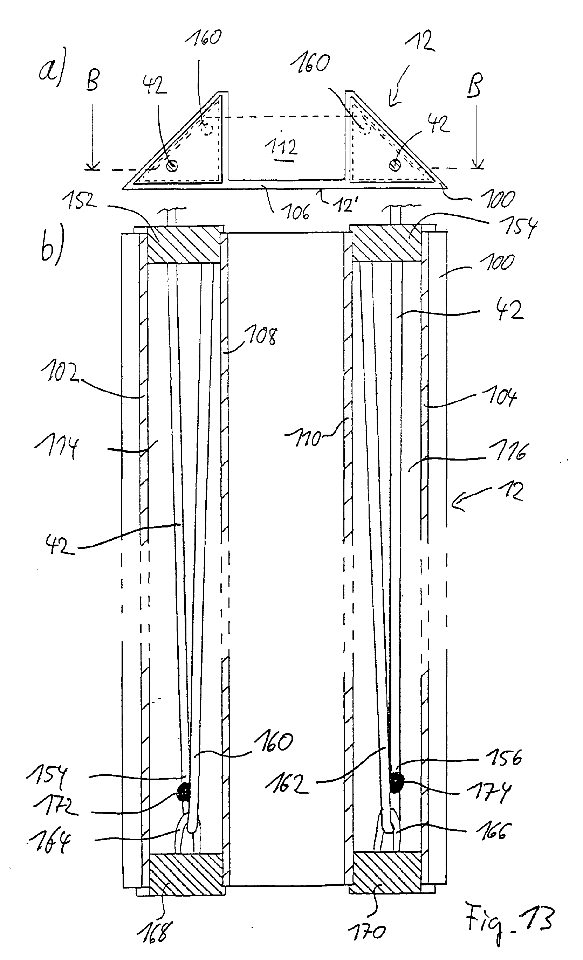

An Stelle eines Tragbands mit einem Koppelglied an einem Ende, das zum Bilden einer Tragschlaufe erst noch mit einem Gegenkoppelglied verbunden werden muss, kann auch ein Tragband vorgesehen sein, das als Tragschlaufe aus der Tragbandaufnahme ausziehbar und in die Tragbandaufnahme einziehbar ist. Figur 12 zeigt einen Roller mit einem derartigen Tragband 42, das stets, also auch im die Tragbandaufnahme eingezogenen Zustand, in Schlaufenform vorliegt. Als Tragbandaufnahme dient im Falle der Figur 12 die Fußplattform 12, die hohl oder mit die Tragbandabschnitte aufnehmenden Profilkanälen ausgeführt ist. Das Tragband 42 erstreckt sich durch einen Durchführkanal eines Auflageelements 150, das einerseits zum Abstützen des Tragbands 42 etwa auf einer Schulter der den Roller tragenden Person dient und andererseits im eingezogenen Zustand des Tragbands 42 als Abschlusselement am vorderen Ende der Fußplattform 12 anliegt. Hierzu ist das Auflageelement 50 vorzugsweise an den Querschnittsumriss der Fußplattform 12 angepasst. Beispielsweise könnte das Auflageelement 150 im Falle einer Fußplattform entsprechend Figur 11 trapezförmig sein und mit den nach außen gerichteten Oberflächen des die Fußplattform bildenden Tragprofils fluchten.

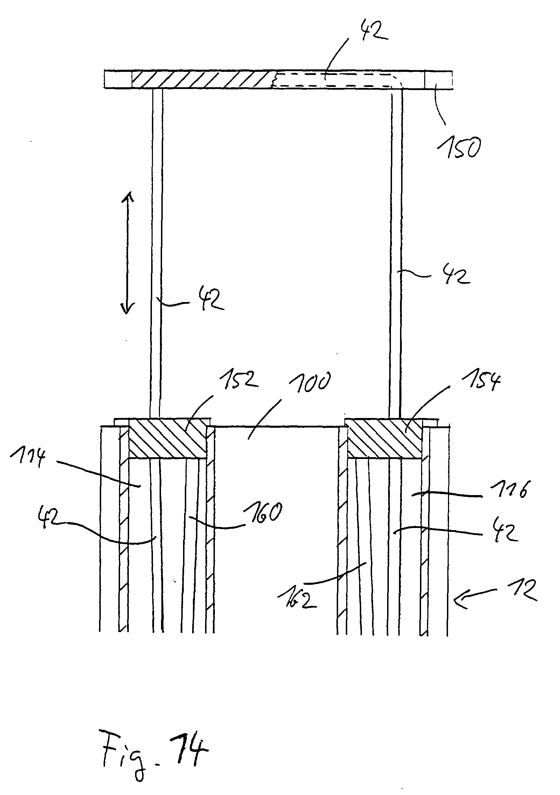

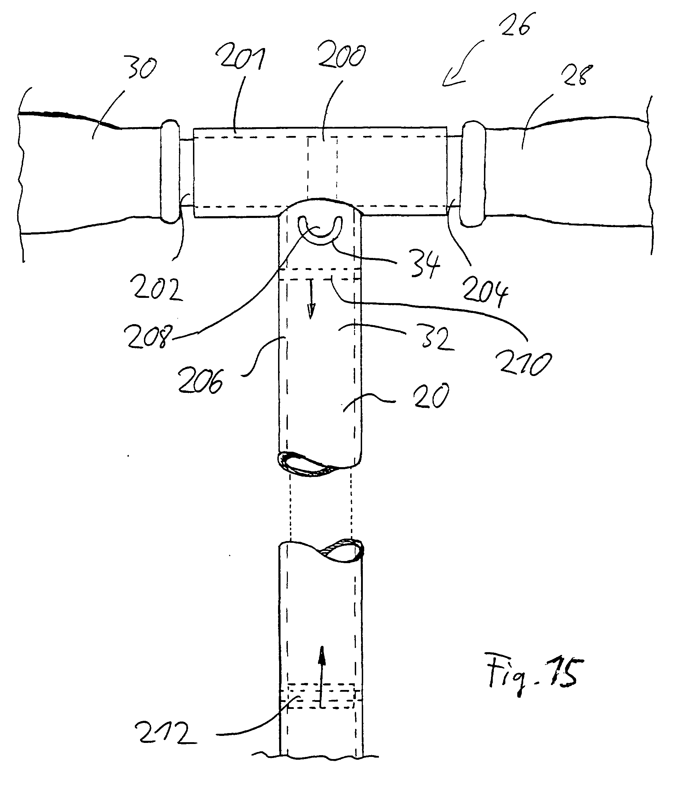

Eine Möglichkeit der Ausbildung der Tragbandeinrichtung auf Grundlage einer Fußplattform entsprechend Figur 11 ist in den Figuren 13 und 14 gezeigt.

Gemäß Figur 13 und 14 wurden die Profilkanäle 114 des die Fußplattform 12 bildenden Tragprofils 100 als Tragbandaufnahmen verwendet. Das Tragband ist durch Durchgangsöffnungen von zwei in die offenen Enden der Profilkanäle 114 und 116 auf Seiten des vorderen Laufrads 16 angesteckten und dort im Presssitz gehaltenen Verschlussstopfen 152 und 154 geführt. Von den Verschlussstopfen 152 und 154 erstreckt sich das beispielsweise einen kreisförmigen Querschnitt aufweisende Tragband im fast vollständig eingezogenen Zustand gemäß Figur 13 über fast die gesamte Länge des betreffenden Profilkanals 114 bzw. 116. An den innen liegenden freien Enden 154 und 156 des Tragbands 42 ist dieses mit einem jeweiligen elastischen Einziehband 160 beziehungsweise 162 verbunden (beispielsweise verknotet), das sich vom Verbindungspunkt in Richtung zu den den Verschlussstopfen 152, 154 entgegengesetzten Enden der Profilkanäle erstreckt, dann durch einen jeweiligen Umlenkanker 164 bzw. 166 eines in das andere offene Ende des jeweiligen Profilkanals eingesteckten und dort im Presssitz gehaltenen Verschlussstopfens 168 bzw. 170 um etwa 180° umgelenkt wird und sich dann zum jeweiligen vorderen Verschlussstopfen 152 bzw. 154 erstreckt und am jeweiligen Verschlussstopfen bzw. im jeweiligen Verschlussstopfen verankert ist. Die Umlenkanker können beispielsweise als Umlenkösen aufgeführt sein, wie in Figur 13 angedeutet ist. Figur 13 zeigt eine Situation, in der die Tragbandschlaufe nur gering aus den Profilkanälen 114 und 116 unter entsprechender elastischer Dehnung der Einziehbänder herausgezogen ist, wie sich aus der Längsposition eines jeweiligen Begrenzungsanschlags 172 bzw. 174 ersehen lässt, der beim Ausziehen des Tragbands bzw. der hiervon gebildeten Tragbandschlaufe aus den Profilkanälen am jeweiligen vorderen Verschlussstopfen 152 bzw. 154 anschlägt und das Tragband über die Verschlussstopfen 152 und 154 am Profil 100 abstützt. Bei den Anschlägen 172 und 174 kann es sich um die das Tragband 42 mit den Einziehbändern 160 und 162 verbindenden Knoten oder diese Funktion erfüllende Verbindungselemente handeln.

Die Einziehbänder können aus jedem geeigneten elastischen Bandmaterial mit beliebigem Querschnitt gebildet sein. Die Figur 13 ist von einem kreisförmigen Querschnitt ausgegangen, der in Figur 13 gestrichelt angedeutet ist. Als Material für die Einziehbänder kommt insbesondere sogenanntes Rundprofilgummi in Betracht. Es sollte ein elastisches Material, gegebenenfalls Rundprofilgummi, verwendet werden, das ohne Ermüdungserscheinungen eine Vielzahl an Ein- und Ausziehvorgängen mitmacht und hinreichend strapazierfähig ist. In Betracht kommt z.B. eine "Rundschnurgummikordel" mit einem Durchmesser von ca. 4mm und einer Festigkeit von ca. 40 Shore.

Bei der in Figur 13 und 14 gezeigten Konstruktion entspricht die maximale Ausziehlänge der Tragbandschlaufe etwa der Länge des Tragprofils 100. Beispielsweise kann die Ausziehlänge etwa 30cm betragen entsprechend üblichen Fußplattformlängen.

Gemäß Figuren 13 und 14 sind die Verschlussstopfen mit an den Tragprofilenden anliegenden Anlageflanschen ausgeführt. Man kann die Verschlussstopfen aber auch ohne derartige Anlageflansche ausführen, so dass diese vollständig in die Profilkanäle 114 und 116 eingepresst und gegebenenfalls darin verstemmt werden können.

Gemäß Figur 14 weist das Auflageelement 150 einen Außenumriss auf, der dem Querschnittsumriss des Tragprofils 100 entspricht, also trapezförmig ist und damit im eingezogenen Zustand des Tragbands 42 einen mit dem Tragprofil 100 fluchtenden Endabschluss bildet. Das Tragband 42 ist durch einen Durchführkanal des Auflageelements 150 durchgeführt. Das Auflageelement 150 kann ein starres, beispielsweise aus Hartkunststoff oder Metall, gefertigtes Teil sein. Es ist aber auch möglich, das Auflageelement 150 aus einem biegbaren Material, beispielsweise Kunststoff, zu fertigen, so dass es sich an die Schulter einer den zusammengeklappten Roller tragenden Person anschmiegen kann.

Es sollte noch die Möglichkeit erwähnt werden, dass das Tragband 42 selbst aus einem elastischen Bandmaterial hergestellt ist, so dass ein gesondertes Einziehband eventuell nicht erforderlich ist. Das Tragband kann dann eine derartige Elastizität aufweisen, dass der Widerstand gegen eine weitere Dehnung progressiv mit der Tragbandlänge zunimmt, um so eine effektive Begrenzung für das Herausziehen des Tragbands aus den Profilkanälen zu erhalten.

Die Ausbildung der Tragbandeinrichtung gemäß Figuren 12, 13 und 14 ist insoweit besonders vorteilhaft, als dass sie eine einfache und kostengünstige Nachrüstung eines herkömmlichen Rollers mit einer Tragbandeinrichtung ermöglicht. Es brauchen nur die Verschlussstopfen 152, 154, 168 und 170, das Tragband 42 und die Einziehbänder 160 und 162 bereitgestellt werden, sowie -falls gewünscht- das Auflageelement 150. Die Verschlussstopfen können herkömmliche die Profilkanäle nur aus optischen Gründen bzw. zur Vermeidung des Eindringens von Schmutz und Feuchtigkeit dienende Verschlussstopfen ersetzen.

Die Länge der Einziehbänder sollte so auf die Länge der Fußplattform abgestimmt sein, dass nach Einsetzen der Verschlussstopfen 152 uns 154 die vorzugsweise noch nicht mit den Tragbandenden verbundenen Enden der Einziehbänder am anderen Profilkanalende ergriffen werden können, um das Einziehband durch die Umlenkösen 164 und 166 zu führen und dann mit den Endabschnitten des Tragbands 42 zu verbinden. Die Verbindung mit den Endabschnitten des Tragbands 42 kann zweistufig erfolgen. In einer ersten Stufe wird beispielsweise das Einziehband 160 mit dem Ende 154 des Tragbands 42 verbunden. So weit hierfür erforderlich, kann das Tragband 42 durch den schon eingesetzten Stopfen 152 in den Profilkanal 114 nachgeführt werden, damit das Tragbandende ergriffen und mit dem durch die Umlenkösen 164 hindurchgeführten Ende des Einziehbandes 160 verbunden werden kann. Anschließend wird dann der Verschlussstopfen 168 in den Profilkanal 114 eingesetzt, insbesondere eingepresst. Hiernach kann dann ohne Weiteres der Endabschnitt 156 des Tragbands 42 mit dem zuvor durch die Umlenköse 166 durchgeführten Ende des Einziehbands 162 verbunden werden, wobei erforderlichenfalls das Tragband 42 durch die Durchführöffnung des Verschlussstopfens 154 hindurch in den Profilkanal 116 nachgeführt wird, um das Ende 156 des Tragbands 42 am anderen Ende des Profilkanals ergreifen und mit dem durch die Umlenköse 166 durchgeführten Ende des Einziehbandes 162 verbinden zu können. Ist diese Verbindung hergestellt, wird dann der Verschlussstopfen 170 in den Profilkanal 116 eingesetzt, insbesondere eingepresst.

Fig. 15 zeigt das obere Ende einer Roller-Steuerstange 20 mit einem der Steuerstange zugehörigen T-Stück 200, in dessen Quer-Rohrabschnitt 201 zwei Lenkerstangenelemente 202 und 204 eingesteckt sind. Die Lenkerstangenelemente 202 und 204 sind im Rohrabschnitt 201 durch Verrasten oder dergleichen gehalten und weisen den Handgriff 28 bzw. den Handgriff 30 auf. Im das Tragband aufnehmenden Vertikalrohrabschnitt 206 des T-Stücks 200 ist die Tragbandauslassöffnung 34 ausgebildet. Um die Stabilität des Rohrabschnits 206 zu erhalten, ist die Tragbandauslassöffnung 34 als bogenförmiges Langloch ausgeführt. Wesentlich ist, dass die Erstreckung der Tragbandauslassöffnung 34 in Umfangsrichtung des Rohrabschnitts 206 vergleichsweise klein gehalten wird. Würde man die Tragbandauslassöffnung als sich in Umfangsrichtung erstreckendes, gradliniges Langloch ausführen, könnte die Stabilität des Rohrabschnitts negativ beeinträchtigt werden, jedenfalls im Falle eines relativ breiten Tragbands. Anstelle eines bogenförmigen Langlochs kommen auch andere Öffnungsgeometrien in Betracht, beispielsweise eine ovale, kreisförmige oder halbkreisförmige Öffnung, deren Ausdehnung in Umfangsrichtung des Rohrabschnitts kleiner ist als die Breite des Tragbands im flachgelegten Zustand. Um die Stabilität des Rohrabschnitts zu gewährleisten, wird also eine Öffnungsgeometrie gewählt, die das aus der Tragbandaufnahme 32, hier der Vertikal-Rohrabschnitt 206, austretende bzw. darin eintretende Tragband lokal in eine Form bringt, in der es sich gegenüber seiner eigentlichen Breite über nur einen geringeren Bereich in Umfangsrichtung des Rohrabschnitts 206 erstreckt. Gemäß der Öffnung 34 der Fig. 15 wird das als Flachband ausgeführte Tragband in eine im Querschnitt U-förmige Form gebracht. Man könnte auch daran denken, als Tragbandauslassöffnung ein V-förmiges Langloch vorzusehen.

Um das Ein- und Austreten des Tragbands zu erleichtern, ist bei der Ausführungsform gemäß Fig. 15 eine vom Langloch 34 begrenzte Zunge 208 leicht nach innen gebogen.

Das Tragband ist in Fig. 15 nicht dargestellt. Es kann sich beispielsweise um ein als Flachband ausgeführtes Gummiband handeln, das beispielsweise an einem Ende an einem Verankerungsstift 210 im Rohrabschnitt 206 festgelegt ist und sich von diesem im Stift zuerst nach unten erstreckt und in einem unteren Rohrabschnitt von einer Umlenkwalze 212 nach oben hin umgelenkt wird, um dann mit einem freien Endabschnitt aus der Tragbandauslassöffnung 34 herauszutreten. An diesem freien Endabschnitt kann dann ähnlich wie beim Ausführungsbeispiel der Fig. 6 ein Koppelglied, beispielsweise in Form eines Karabinerhakens oder dergleichen, angeordnet sein. Durch Ausführung des Tragbands als Gummiband kann eine gesonderte Einziehanordnung zum Einziehen des Tragbands in die Tragbandaufnahme vermieden werden. Das Tragband dient dann gewissermaßen selbst als elastisches Einziehband.

Vorgeschlagen wird eine Tragbandeinrichtung für einen zusammenklappbaren Roller etwa des "Scooter"- oder "Kickboard"-Typs. Die Tragbandeinrichtung weist ein Tragband auf, das aus einer an einem Teil des Rollers dauerhaft angebrachten oder anbringbaren Tragbandaufnahme ausziehbar und in die Tragbandaufnahme einziehbar ist. An einem freien Ende des Tragbands ist ein Koppelglied vorgesehen, das mit einem dauerhaft an einem Teil des Rollers anbringbaren oder angebrachten Gegenkoppelglied der Tragbandvorrichtung oder einem mit dem Roller integralen Gegenkoppelglied koppelbar ist, um eine Tragschlaufe zu bilden.

## Patentansprüche

1. Tretroller, umfassend:
- eine Fußplattform (12),
- eine an der Fußplattform gehaltene Steuer- oder/und Haltestange (20),
- wenigstens ein vorderes, gegebenenfalls mit der Steuer-oder/und Haltestange gekoppeltes oder koppelbares Laufrad (16),
- wenigstens ein hinteres Laufrad (14);
wobei wenigstens einem (16) der Laufräder ein zur Federung oder/und Dämpfung dienender Elastikkörper (68) zugeordnet ist, der in einem Aufnahmeraum (64) angeordnet ist und zwischen einer laufradseitigen Angriffsfläche (60) einerseits und einer fußplattformseitigen oder/und stangenseitigen Angriffsfläche (66) andererseits elastisch komprimierbar ist.

2. Tretroller nach Anspruch 1, **dadurch gekennzeichnet, dass** der Elastikkörper ein elastischer Kunststoffkörper (68) ist, der vorzugsweise aus einem geschlossenporigen Kunststoffschaum gebildet ist.

3. Tretroller nach Anspruch 1 oder 2, **dadurch gekennzeichnet, dass** der vorzugsweise zylinderförmige Elastikkörper (68) in einen Zylinderraum (64) eines Zylinder-Kolben-Geräts zwischen einem eine der Angriffsflächen aufweisenden Kolben (60) einerseits und einem die andere Angriffsfläche aufweisenden Zylinderende (66) oder weiteren Kolben andererseits aufgenommen ist.

4. Tretroller nach Anspruch 3, **dadurch gekennzeichnet, dass** das Zylinder-Kolben-Gerät einen als Zylinder dienenden Rohrabschnitt (32) der Steuer- oder/und Haltestange (20) umfasst.

5. Tretroller nach Anspruch 4, **dadurch gekennzeichnet, dass** der Kolben (60) von einem das wenigstens eine vordere Laufrad (16) haltenden Radhalter (18) hochsteht.

6. Tretroller nach Anspruch 4 oder 5, **dadurch gekennzeichnet, dass** der als Zylinder dienende Rohrabschnitt (32) in einem Lenkkopfrohr (30) einer Drehlageranordnung (22) aufgenommen ist, die die Steuer-oder/und Haltestange (20) an der Fußplattform (12) drehbar lagert.

7. Tretroller nach einem der Ansprüche 1 bis 6, **dadurch gekennzeichnet, dass** eine Vorspann-Anordnung (72, 76) zum gezielten Vorspannen des Elastikkörpers (68) vorgesehen ist.

8. Tretroller nach Anspruch 3 und 7, **dadurch gekennzeichnet, dass** die Vorspannanordnung einen Anschlag (72) umfasst, der eine Mindest-Einfahrposition des Kolbens (60) beziehungsweise eines der Kolben in den Zylinder (32) und damit eine Vorspannung des Elastikkörpers (68) definiert.

9. Tretroller nach Anspruch 8, **dadurch gekennzeichnet, dass** die gewünschte Vorspannung des Elastikkörpers (68) und damit die Federungsund Dämpfungseigenschaften einstellbar sind, vorzugsweise durch Verstellen oder/und Auswechseln des Anschlags (72) oder/und Auswechseln des Elastikkörpers (68).

10. Tretroller nach Anspruch 8 oder 9, **dadurch gekennzeichnet, dass** der Anschlag von einer axial positionierbaren Hülse (72) gebildet ist, durch die sich der Kolben (60) oder eine diesem zugeordnete Kolbenstange (62) erstreckt.

11. Tretroller nach einem der vorhergehenden Ansprüche, jedenfalls nach Anspruch 5, **gekennzeichnet durch** eine Lenkmomente von der Steuer- oder/und Haltestange (20) auf den Radhalter (18) übertragende Kniehebelanordnung (86).

12. Tretroller, gewünschtenfalls nach einem der vorhergehenden Ansprüche, umfassend:
- eine Fußplattform (12),
- eine an der Fußplattform gehaltene Steuer- oder/und Haltestange (20),
- wenigstens ein vorderes, gegebenenfalls mit der Steuer-oder/und Haltestange gekoppeltes oder koppelbares Laufrad (16),
- wenigstens ein hinteres Laufrad (14);
wobei wenigstens ein Laufrad (14, 16) einen auf einer Radfelge (92) gehaltenen ringförmigen Radkern (94) aus einem niedershoreigen Laufradmaterial und einen auf dem Radkern angeordneten, eine Lauffläche (96) aufweisenden Laufring (98) aus einem hochshoreigen Laufradmaterial aufweist.

13. Tretrollen nach Anspruch 12, **dadurch gekennzeichnet, dass** als Laufradmaterial ein Gummimaterial oder Kunststoffmaterial eingesetzt ist.

14. Tretrollen nach Anspruch 12 oder 13, **dadurch gekennzeichnet, dass** der Radkern (94) und der Laufring (98) durch Vulkanisation miteinander verbunden sind.

15. Tretroller, gewünschtenfalls nach einem der vorhergehenden Ansprüche, umfassend:
- eine Fußplattform (12),
- eine an der Fußplattform gehaltene Steuer- oder/und Haltestange (20),
- wenigstens ein vorderes, gegebenenfalls mit der Steuer-oder/und Haltestange gekoppeltes oder koppelbares Laufrad (16),
- wenigstens ein hinteres Laufrad (14);
wobei die Fußplattform (12) federnd ausgebildet oder/und nach oben gewölbt ausgeführt ist.

16. Tretroller, gewünschtenfalls nach einem der vorhergehenden Ansprüche, umfassend:
- eine Fußplattform (12),
- eine an der Fußplattform gehaltene Steuer- oder/und Haltestange (20),
- wenigstens ein vorderes, gegebenenfalls mit der Steuer-oder/und Haltestange gekoppeltes oder koppelbares Laufrad (16),
- wenigstens ein hinteres Laufrad (14);
wobei eine dem wenigstens einen hinteren Laufrad (14) zugeordnete Bremsanordnung (110) vorgesehen ist, die ein in Fahrtrichtung hinter dem zugeordneten Laufrad (14) an einem Bremsblechhalter (100) gehaltenes und beim Bremsen durch reibschlüssigen Eingriff mit dem Laufrad (14) auf Zug belastetes Bremsblech (110) aufweist.

17. Tretroller nach Anspruch 16, **dadurch gekennzeichnet, dass** als Bremsblechhalter ein das betreffende hintere Laufrad (14) haltender Radhalter (100) dient.

18. Tretroller, gewünschtenfalls nach einem der vorhergehenden Ansprüche, umfassend:
- eine Fußplattform (12),
- eine an der Fußplattform gehaltene Steuer- oder/und Haltestange (20),
- wenigstens ein vorderes, gegebenenfalls mit der Steuer-oder/und Haltestange gekoppeltes oder koppelbares Laufrad (16),
- wenigstens ein hinteres Laufrad (14);
wobei eine dem wenigstens einen hinteren Laufrad (14) zugeordnete Bremsanordnung (110) vorgesehen ist, die ein Bremsblech (110) mit zwei gegenüber einer Laufradachse in entgegengesetzten Richtungen geneigten Reibflächen (120, 122) aufweist, die mit Laufradflanken des betreffenden Laufrads (14) in reibschlüssigen Eingriff bringbar sind.

19. Tretroller nach einem der vorhergehenden Ansprüche, **dadurch gekennzeichnet, dass** die gewünschtenfalls teleskopierbare Steuer-oder/und Haltestange (20) aus eine Fahrstellung, in der sie von der Fußplattform (12) hochsteht, in eine der Fußplattform (12) benachbarte Transportstellung klappbar ist.

20. Tretroller nach einem der vorhergehenden Ansprüche, **dadurch gekennzeichnet, dass** er vom dem als "Scooter" oder "Kickboard" bezeichneten Typ ist.

21. Zusammenklappbarer Roller, umfassend:
- eine Fußplattform (12),
- eine gewünschtenfalls teleskopierbare Steuer- oder/und Haltestange (20), die zum Transport des Rollers aus einer Fahrstellung, in der sie von der Fußplattform (12) hochsteht, in eine der Fußplattform (12) benachbarte Transportstellung klappbar ist,
- wenigstens ein vorderes, mit der Steuer- oder/und Haltestange (20) gekoppeltes oder koppelbares Laufrad (16),
- wenigstens ein hinteres Laufrad (14);
**dadurch gekennzeichnet,**
**dass** der Roller (10) eine Tragbandeinrichtung (32, 36, 38, 42) aufweist, die ein Tragband (42) umfasst, das aus einer an einem Teil (20) des Rollers dauerhaft angeordneten oder in den Roller integrierten Tragbandaufnahme (32) ausziehbar und in die Tragbandaufnahme einziehbar ist.

22. Roller nach Anspruch 21, **dadurch gekennzeichnet, dass** das Tragband (42) an einem freien Ende ein Koppelglied (36) aufweist, das mit einem dauerhaft an einem Teil des Rollers angeordneten oder in den Roller integrierten Gegenkoppelglied (38) koppelbar ist, um eine Tragschlaufe zu bilden.

23. Roller nach Anspruch 21, **dadurch gekennzeichnet, dass** das Tragband (42) in Form einer Tragschlaufe aus der Tragbandaufnahme (114, 116) ausziehbar und in die Tragbandaufnahme einziehbar ist.

24. Roller nach einem der Ansprüche 21 bis 23, **dadurch gekennzeichnet, dass** er von dem als "Skooter" oder "Kickboard" bezeichneten Typ ist.

25. Roller nach einem der Ansprüche 21 bis 24, **dadurch gekennzeichnet, dass** die Steuer- oder/und Haltestange (20) an einem von dem vorderen Laufrad ferneren Ende eine im wesentlichen quer zur Steuer-oder/und Haltestange verlaufende Lenkerstangenanordnung (26) aufweist.

26. Roller nach einem der Ansprüche 21 bis 25, **dadurch gekennzeichnet, dass** die Steuer- oder/und Haltestange (20) an einem von dem vorderen Laufrad ferneren Ende einen Steuer- oder/und Haltekopf (50) aufweist.

27. Roller nach einem der Ansprüche 21 bis 26, **dadurch gekennzeichnet, dass** die Tragbandaufnahme einen Tragband-Aufroller (60) aufweist, von dem das Tragband (42) gegen die Wirkung einer Federanordnung (64) abrollbar und auf den das Tragband (42) unter der Wirkung der Federanordnung (64) aufrollbar ist.

28. Roller nach einem der Ansprüche 21 bis 26, **dadurch gekennzeichnet, dass** die Tragbandaufnahme eine Tragband-Fixiereinrichtung (70, 72, 74; 82, 86, 88) aufweist, die in einem Fixierzustand das Tragband (42) gegen Ausziehen aus der Tragbandaufnahme sichert und in einem Freigabezustand das Ausziehen des Tragbands (42) aus der Tragbandaufnahme freigibt.

29. Roller nach Anspruch 28, **dadurch gekennzeichnet, dass** die Tragband-Fixiereinrichtung (70, 72, 74; 82, 86, 88) im Fixierzustand das Tragband (42) auch gegen ein Einziehen in die Tragbandaufnahme sichert und im Freigabezustand auch das Einziehen des Tragbands (42) in die Tragbandaufnahme freigibt.

30. Roller nach Anspruch 28 oder 29 in Rückbeziehung auf Anspruch 27, **dadurch gekennzeichnet, dass** die Fixiereinrichtung einen dem Tragband-Aufroller (60) zugeordneten Sperrklinkenmechanismus (74, 72) aufweist, mittels dem der Tragband-Aufroller zumindest bezogen auf eine Abwickel-Drehrichtung gegen Drehung sperrbar ist.

31. Roller nach einem der Ansprüche 28 bis 30, **dadurch gekennzeichnet, dass** die Fixiereinrichtung einen Klemmmechanismus (82, 86, 88) aufweist, mittels dem das Tragband (42) festklemmbar ist.

32. Roller nach einem der Ansprüche 25 und 27 bis 31, **dadurch gekennzeichnet, dass** die Tragbandaufnahme (32) an der Lenkerstangenanordnung (26) angeordnet oder in diese integriert ist.

33. Roller nach einem der Ansprüche 26 und 27 bis 31, **dadurch gekennzeichnet, dass** die Tragbandaufnahme (32) an dem Steuer-oder/und Halteknopf (50) angeordnet oder in diesen integriert ist.

34. Roller nach einem der Ansprüche 21 bis 31, **dadurch gekennzeichnet, dass** die Tragbandaufnahme an der Steuer- oder/und Haltestange angeordnet oder in diese integriert ist, vorzugsweise an/in einem von dem vorderen Laufrad ferneren Stangenbereich.

35. Roller nach Anspruch 34, **dadurch gekennzeichnet, dass** die Tragbandaufnahme (32) in der Steuer- oder/und Haltestange, ggf. in einem Stangenteil oder einem T-Stück-Teil (200) zum Halten von Lenkerabschnitten (202, 204), eine Tragbanddurchlassöffnung (34) aufweist.

36. Roller nach Anspruch 35, **dadurch gekennzeichnet, dass** die Tragbanddurchlassöffnung (34) in Umfangsrichtung eines Rohrabschnitts (206) der Tragbandaufnahme (32) eine geringere Abmessung als die eigentliche Breite des als Flachband ausgeführten Tragbands aufweist.

37. Roller nach Anspruch 35 oder 36, **dadurch gekennzeichnet, dass** die Tragbanddurchlassöffnung einen bogenförmigen Rand aufweist, beispielsweise derart, dass sie von einem bogenförmigen Langloch (34) gebildet ist, das auf einer Seite vorzugsweise von einer nach innen gebogenen Zunge (208) begrenzt ist.

38. Roller nach einem der Ansprüche 32 bis 37, **dadurch gekennzeichnet, dass** das Gegenkoppelglied an der Steuer- oder/und Haltestange angeordnet ist, vorzugsweise an einem dem vorderen Laufrad näheren Stangenbereich.

39. Roller nach einem der Ansprüche 32 bis 37, **dadurch gekennzeichnet, dass** das Gegenkoppelglied (38) an einem die Steuer- oder Haltestange (20) haltenden Lagerteil, gegebenenfalls einem Lagerrohr (22), angeordnet ist.

40. Roller nach einem der Ansprüche 32 bis 37, **dadurch gekennzeichnet, dass** das Gegenkoppelglied an der Fußplattform angeordnet ist, vorzugsweise an einem dem vorderen Laufrad näheren Fußplattformbereich.

41. Roller nach einem der Ansprüche 21 bis 31, **dadurch gekennzeichnet, dass** die Tragbandaufnahme an einem die Steuer- oder/und Haltestange haltenden Lagerteil, gegebenenfalls einem Lagerrohr, angeordnet ist oder darin integriert ist.

42. Roller nach einem der Ansprüche 21 bis 31, **dadurch gekennzeichnet, dass** die Tragbandaufnahme an der Fußplattform angeordnet ist oder in diese integriert ist, vorzugsweise an/in einem dem vorderen Laufrad näheren Fußplattformbereich.

43. Roller nach Anspruch 42, **dadurch gekennzeichnet, dass** die Tragbandaufnahme (32) und - soweit vorgesehen - gewünschtenfalls das Gegenkoppelglied an der Unterseite der Fußplattform (12) vorgesehen ist.

44. Roller nach Anspruch 42 oder 43, **dadurch gekennzeichnet, dass** die Tragbandaufnahme (32) und - soweit vorgesehen - gewünschtenfalls das Gegenkoppelglied in einem Profilkanal (112) eines die Fußplattform bildenden oder abstützenden Tragprofils (200) aufgenommen ist.

45. Roller nach Anspruch 44, **dadurch gekennzeichnet, dass** die Tragbandaufnahme (32) oder/und das Gegenkoppelglied mit dem Tragprofil (200) verschraubt oder verschweißt ist oder im Profilkanal (112) festgespannt ist.

46. Roller nach Anspruch 42 oder 43, **dadurch gekennzeichnet, dass** die Tragbandaufnahme (32) von wenigstens einem Profilkanal (114, 116) eines die Fußplattform bildenden oder abstützenden Tragprofils (100) gebildet ist.

47. Roller nach Anspruch 46, **dadurch gekennzeichnet, dass** die Tragbandaufnahme von zwei nebeneinander verlaufenden Profilkanälen (114, 116) des Tragprofils (100) gebildet ist, die jeweils einen Abschnitt des eine Tragschlaufe bildenden Tragbands (42) aufnehmen.

48. Roller nach einem der Ansprüche 21 bis 47, **dadurch gekennzeichnet, dass** die Tragbandeinrichtung eine elastische Einziehanordnung (160, 162) zum Einziehen des aus der Tragbandaufnahme (114, 116) ausgezogenen Tragbands (42) zurück in die Tragbandaufnahme aufweist, wobei die Einziehanordnung vorzugsweise in die Tragbandaufnahme aufgenommen oder integriert ist.

49. Roller nach Anspruch 48, **dadurch gekennzeichnet, dass** die Einziehanordnung wenigstens ein elastisches Einziehband (160, 162) umfasst, das mit dem Tragband (42) verbunden ist oder das Tragband bildet.

50. Roller nach einem der Ansprüche 46 bis 49, **dadurch gekennzeichnet, dass** wenigstens ein in ein offenes Ende des Profilkanals (114 bzw. 116) eingesetzter Verschlussstopfen (152, 154, 168, 170) vorgesehen ist, der eine Durchführöffnung für das Tragband (42) oder/und eine Verankerung für die Einziehanordnung, gegebenenfalls für das Einziehband (160, 162), oder/und einen Umlenkanker (164, 166) zum Umlenken des Tragbands oder/und des Einziehbands (160, 162) aufweist.

51. Roller nach einem der Ansprüche 21 bis 50, **dadurch gekennzeichnet, dass** das Tragband (42) aus der Tragbandaufnahme (114, 116) eine definierte Länge ausziehbar ist und im maximal ausgezogenen Zustand durch eine Anschlaganordnung (172, 174) am Roller oder an oder in der Tragbandaufnahme gehalten wird.

52. Roller nach einem der Ansprüche 21 bis 51, insbesondere nach Anspruch 38 oder 39 sowie nach Anspruch 23, **dadurch gekennzeichnet, dass** das Gegenkoppelglied an der Lenksteueranordnung angeordnet oder in diese integriert ist.

53. Roller nach einem der Ansprüche 21 bis 52, insbesondere nach Anspruch 41 oder 42 sowie nach Anspruch 44, **dadurch gekennzeichnet, dass** das Gegenkoppelglied an dem Steuer- oder/und Haltekopf angeordnet oder in diesen integriert ist.

54. Roller nach einem der Ansprüche 21 bis 53, insbesondere nach Anspruch 41 oder 42, **dadurch gekennzeichnet, dass** das Gegenkoppelglied an der Steuer- oder/und Haltestange angeordnet ist, vorzugsweise an einem dem vorderen Laufrad ferneren Stangenbereich.

55. Roller nach einem der Ansprüche 21 bis 54, insbesondere nach Anspruch 41 oder 42, **dadurch gekennzeichnet, dass** das Gegenkoppelglied an der Fußplattform angeordnet ist, vorzugsweise an einem dem hinteren Laufrad näheren Fußplattformbereich.

56. Roller nach einem der Ansprüche 21 bis 55, **dadurch gekennzeichnet, dass** die Tragbandeinrichtung zwei Tragbänder umfasst, insbesondere um ein rucksackartiges Tragen des Rollers vorzusehen.

57. Roller nach Anspruch 56, **dadurch gekennzeichnet, dass** für die Tragbänder jeweils eine eigene Tragbandaufnahme vorgesehen ist.

58. Roller nach Anspruch 57, **dadurch gekennzeichnet, dass** die Tragbandaufnahmen oder/und Tragbänder jeweils einem gesonderten von parallel zueinander verlaufenden Profilkanälen eines die Fußplattform bildenden oder abstützenden Tragprofils zugeordnet sind.

59. Tragbandeinrichtung zum Bestücken eines zusammenklappbaren Rollers (10), der umfasst:
- eine Fußplattform (12),
- eine gewünschtenfalls teleskopierbare Steuer- oder/und Haltestange (20), die zum Transport des Rollers aus einer Fahrstellung, in der sie von der Fußplattform (12) hochsteht, in eine der Fußplattform (12) benachbarte Transportstellung klappbar ist,
- wenigstens ein vorderes, mit der Steuer- oder/und Haltestange (20) gekoppeltes oder koppelbares Laufrad (16),
- wenigstens ein hinteres Laufrad (14);
wobei die Tragbandeinrichtung (32, 36, 38, 42) ein Tragband (42) zum Tragen des zusammengeklappten Rollers umfasst, das aus einer an einem Teil des Rollers dauerhaft anbringbaren Tragbandaufnahme (32) ausziehbar und in die Tragbandaufnahme einziehbar ist oder das derart dauerhaft in den Roller integrierbar ist, dass es aus einer als Tragbandaufnahme dienenden Komponente (100) des Rollers ausziehbar und in diese einziehbar ist.

60. Tragbandeinrichtung nach Anspruch 59, **dadurch gekennzeichnet, dass** das Tragband (42) an einem freien Ende ein Koppelglied (36) aufweist, das mit einem dauerhaft an einem Teil des Rollers anbringbaren Gegenkoppelglied (38) der Tragbandvorrichtung oder einem mit dem Roller integralen Gegenkoppelglied koppelbar ist, um eine Tragschlaufe zu bilden.

61. Roller nach Anspruch 59, **dadurch gekennzeichnet, dass** das Tragband (42) in Form einer Tragschlaufe aus der Tragbandaufnahme (114, 116) ausziehbar und in die Tragbandaufnahme einziehbar ist.

62. Tragbandeinrichtung nach einem der Ansprüche 59 bis 61, **dadurch gekennzeichnet, dass** sie für einen Roller (10) des als "Skooter" oder "Kickboard" bezeichneten Typs vorgesehen ist.

63. Tragbandeinrichtung nach einem der Ansprüche 59 bis 62, **dadurch gekennzeichnet, dass** sie eine Austausch-Lenkeranordnung (26) umfasst, an der die Tragbandaufnahme (32) angeordnet oder in die die Tragbandaufnahme integriert ist.

64. Tragbandeinrichtung nach einem der Ansprüche 59 bis 62, **dadurch gekennzeichnet, dass** sie einen Austausch-Steuer- oder/und Haltekopf (50) umfasst, an dem die Tragbandaufnahme angeordnet oder in den die Tragbandaufnahme (36) integriert ist.

65. Tragbandeinrichtung nach einem der Ansprüche 59 bis 62, **dadurch gekennzeichnet, dass** sie eine der Steuer- oder/und Haltestange zugeordnete Austauschkomponente, ggf. Stangen-Austauschteil oder T-Stück-Austauschteil (200) zum Halten von Lenkerabschnitten (202, 204) umfasst, an der die Tragbandaufnahme angeordnet oder in die die Tragbandaufnahme (32) integriert ist.

66. Tragbandeinrichtung nach einem der Ansprüche 59 bis 62, **dadurch gekennzeichnet, dass** sie eine einem Profilkanal (112) eines Tragprofils (100) des Rollers zugeordnete, gegebenenfalls dort festzuspannende oder auf andere Weise dort anzubringende Tragbandaufnahme umfasst.

67. Tragbandeinrichtung nach einem der Ansprüche 59 bis 62, **dadurch gekennzeichnet, dass** sie ein Tragband (42) umfasst, das in wenigstens einen als Tragbandaufnahme dienenden Profilkanal (114, 116) eines Tragprofils (100) des Rollers integrierbar ist.

68. Tragbandeinrichtung nach Anspruch 67, **dadurch gekennzeichnet, dass** das Tragband in zwei nebeneinander verlaufende Profilkanälen (114, 116) des Tragprofils (100) integrierbar ist, wobei die beiden Profilkanäle jeweils einen Abschnitt des eine Tragschlaufe bildenden Tragbands (42) aufnehmen.

69. Tragbandeinrichtung nach einem der Ansprüche 59 bis 68, **dadurch gekennzeichnet, dass** sie ferner eine elastische Einziehanordnung zum Einziehen des aus der Tragbandaufnahme, ggf. aus dem wenigstens einen Profilkanal (114, 116), ausgezogenen Tragbands (42) zurück in die Tragbandaufnahme, ggf. in den wenigstens einen Profilkanal, aufweist, die vorzugsweise in die Tragbandaufnahme, ggf. in den wenigstens einen Profilkanal (112), integrierbar ist.

70. Tragbandeinrichtung nach Anspruch 69, **dadurch gekennzeichnet, dass** die Einziehanordnung wenigstens ein elastisches Einziehband (160, 162) umfasst, das mit dem Tragband (42) verbunden oder verbindbar ist oder das das Tragband bildet.

71. Tragbandeinrichtung nach einem der Ansprüche 67 bis 70, **dadurch gekennzeichnet, dass** sie ferner wenigstens einen Verschlußstopfen (152, 154, 168, 170) zum Einsetzen in ein offenes Ende des Profilkanals (114 bzw. 116) umfasst, wobei wenigstens ein Verschlussstopfen eine Durchführöffnung für das Tragband (42) oder/und eine Verankerung für die Einziehanordnung, gegebenenfalls für das Einziehband (160, 162), oder/und ein Umlenkanker (164, 166) zum Umlenken des Tragbands oder/und des Einziehbands (160, 162) aufweist.

72. Tragbandvorrichtung nach einem der Ansprüche 59 bis 71, mit den sich auf die Tragbandvorrichtung beziehenden Merkmalen wenigstens eines der Ansprüche 21 bis 58.

73. Tragbandvorrichtung nach Anspruch 72, **dadurch gekennzeichnet, dass** mittels der Tragbandvorrichtung ein herkömmlicher Roller ohne Tragbandvorrichtung zu einem Roller nach einem der Ansprüche 21 bis 58 nachrüstbar ist.
